# EUROPEAN PATENT SPECIFICATION

(11) **EP 2 819 229 B1**
(45) Date of publication and mention of the grant of the patent: **11.10.2017**
(21) Application number: 14173375.8
(22) Date of filing: 23.06.2014
(51) Int. Cl.: H01M 8/24, H01M 8/02, H01M 8/249, H01M 8/0276, H01M 8/0286, H01M 8/0243, H01M 8/243, H01M 8/2485

(54) **Solid oxide fuel cell system**
Festoxidbrennstoffzellensystem
Système de pile à combustible d'oxyde solide

(30) Priority: 27.06.2013 JP 2013135084; 27.06.2013 JP 2013135085
(43) Date of publication of application: 31.12.2014
(73) Proprietor: TOTO LTD., Kitakyushu-shi Fukuoka 802-8601 (JP)
(72) Inventor: Watanabe, Naoki, Kitakyushu-shi, Fukuoka 8028601 (JP); Isaka, Nobuo, Kitakyushu-shi, Fukuoka 8028601 (JP); Tanaka, Shuhei, Kitakyushu-shi, Fukuoka 8028601 (JP); Hoshiko, Takuya, Kitakyushu-shi, Fukuoka 8028601 (JP); Sato, Masaki, Kitakyushu-shi, Fukuoka 8028601 (JP); Okamoto, Osamu, Kitakyushu-shi, Fukuoka 8028601 (JP); Ando, Shigeru, Kitakyushu-shi, Fukuoka 8028601 (JP); Furuya, Seiki, Kitakyushu-shi, Fukuoka 8028601 (JP); Momiyama, Yutaka, Kitakyushu-shi, Fukuoka 8028601 (JP); Hayama, Kiyoshi, Kitakyushu-shi, Fukuoka 8028601 (JP)
(74) Representative: Witte, Weller & Partner Patentanwälte mbB

(56) References cited:
- JP-A- H0 362 460
- JP-A- 2003 045 455
- JP-A- 2004 063 355
- JP-A- 2004 288 608
- JP-A- 2009 181 854

## Description

### Technical Field

0001 The present invention pertains to a solid oxide fuel cell system, and more particularly to a solid oxide fuel cell system for generating electricity by supplying fuel and oxidant gas to multiple fuel cells housed in a fuel cell module.

### Background Art

0002 Solid oxide fuel cells ("SOFCs" below) are fuel cells which operate at a relatively high temperature in which, using an oxide ion-conducting solid electrolyte as electrolyte, with electrodes attached to both sides thereof, fuel gas is supplied to one side thereof and oxidant gas (air, oxygen, or the like) is supplied to the other side thereof.

0003 Generally a large number of fuel cells are housed in a fuel cell module forming a solid oxide fuel cell system, and fuel gas is distributed to each of this large number of fuel cells. The fuel gas distributed to each of the fuel cells is supplied first to what is referred to as a fuel gas dispersion chamber, then flows from this fuel gas dispersion chamber into each of the respective fuel cells. Therefore each of the large number of fuel cells is affixed to a fuel gas dispersion chamber so as to communicate with the interior of the fuel gas dispersion chamber. Since solid oxide fuel cells generally operate at high temperatures of 600 to 1000°C, each of the fuel cells must be affixed so as to withstand such high temperatures. In addition, the connecting portion between each of the fuel cells and the fuel gas dispersion chamber must be airtight.

0004 Therefore to join each of the fuel cells to the fuel gas dispersion chamber, such methods as mechanically affixing the fuel cells to the fuel gas dispersion chamber via a metal part, then flowing glass in paste form into the joining portion, have been used to assure airtightness.

In the fuel cells set forth in Japanese Patent JP3894860B (Patent Document 1) and Japanese Published Unexamined Patent Application JPH6-215782A (Patent Document 2), adhesion of the joining portions of the constituent parts of the interior of the fuel cell module is accomplished using a ceramic adhesive.

### Prior Art References

0005

### Patent Documents

Patent Document 1
   Japanese Patent JP3894860B
Patent Document 2
   Japanese Published Unexamined Patent Application JPH6-215782A

### Summary of the Invention

### Problems the Invention Seeks to Resolve

0006 The problem, however, has been that when airtightness is a accomplished by flowing glass in a paste form into joining portions after mechanically affixing fuel cells, two steps are required for each joining location, and since these steps are required for all of the large number of fuel cells, manufacturing costs mounted.

In addition, when fuel cells are affixed via metal parts inside a fuel cell module, chrome components vaporize from the metal parts when exposed to high temperatures, and this causes chrome poisoning of the fuel cells leading to degradation of the cells. The problem can also arise that when sealing is done using glass in order to achieve airtightness at joining portions, boron vaporizes from the glass and causes degradation of the fuel cells by adhering thereto.

0007 On the other hand, the aforementioned type of degradation to fuel cells can be avoided by adhering using the ceramic adhesive set forth in Japanese Patent JP3894860B and Japanese Published Unexamined Patent Application JPH6-215782A. The problem for conventional joints using ceramic adhesive, however, has been the difficulty of obtaining reliable seals in the affixing portions while simultaneously affixing the fuel cells.

0008 I.e., water or other solvents in the ceramic adhesive evaporate during hardening after application causing volumetric shrinkage, peeling, or excessive cracking associated with that shrinkage can occur in the ceramic adhesive layer after hardening unless that shrinkage is skillfully controlled. When such peeling or cracking does occur in the ceramic adhesive layer, sufficient sealing properties cannot be secured in those joint portions even though sufficient adhesion strength may be obtained between constituent parts.

0009 If fuel gas leaks out from the affixing portions of the fuel cells, the leaked fuel gas combusts in inappropriate locations on the air electrode side, leading to a high probability of fuel cell damage. Also, leakage of fuel gas presents the risk of increased running costs associated with reduced fuel utilization, and fuel depletion caused by insufficient supply of fuel gas to the fuel electrode side.

0010 In order to compensate for these sealing deficiencies, it has been proposed to coat the top of the ceramic adhesive layer with glass after adhesion (Japanese Patent JP3894860B, Paragraph [0029]). However, when a ceramic adhesive layer is coated with glass, the number of manufacturing steps increases and the problem of boron evaporation from the glass occurs, so there is no advantage to using the ceramic adhesive.

0011 Peeling and cracking in the ceramic adhesive layer is prone to occur when adhered ceramic adhesive is suddenly dried. It is therefore possible to substantially avoid peeling or cracking by slow, natural drying of adhered ceramic adhesive at room temperature. However, when ceramic adhesive is dried naturally, an extremely long period of time is required until sufficient adhesion strength can be obtained at the joint portion, and during that time material cannot be moved to the next manufacturing step. Therefore natural drying is completely unsuited for practical industrial use, particularly in the production of solid oxide fuel cell system, as these require a large number of joint portions and multiple manufacturing steps.

0012 I.e., when assembled pieces coated with adhesive are dried in a drying oven or the like, as is generally done to promote the drying of adhesive, excessive cracking occurs in the hardened ceramic adhesive layer. Of the various ceramic adhesives applied by coating, it is areas such as parts receiving large amounts of drying heat, locations where it is difficult for heat to diffuse and therefore temperatures rise, or parts easily subject to humidity gradients upon contact with the atmosphere which are first dried and hardened. Therefore hardening begins at specific parts of the surface layer, and even within the surface layer hardening does not start uniformly nor is the hardened state even, so uniformly hardening of all portions is not possible. Next, when adhesive on the interior of a hardened surface portion or surrounding a hardened surface is dried, stress concentrates with shrinkage of weak portions where drying is still not sufficiently completed in areas surrounding ceramic adhesive which has already hardened, and cracks form in these weak portions so that airtightness is compromised. Although the use of ceramic adhesives in the assembly of solid oxide fuel cell system is set forth in patent documents, the fact that there are problems with airtightness and they have not been put to practical use is believed to result from these causes.

0013

Furthermore, the inventors have discovered a new technical problem in that when ceramic adhesive is used in the assembly of a solid oxide fuel cell system, then even if the ceramic adhesive is sufficiently hardened to withstand practical strength requirements and sealing properties able to withstand practical use are obtained, airtightness in the adhered parts is lost when the solid oxide fuel cell system is first operated and the parts are exposed to high temperatures. I.e., even in a state whereby adhered ceramic adhesive is hardened and sufficient airtightness and adhesive strength are obtained, small amounts of moisture or other evaporable solvents remain within the hardened ceramic adhesive layer. In particular, when residual moisture or solvents remain in large amounts in a concentrated form internally, the hardened ceramic adhesive layer is heated at an extremely high speed to temperatures which are far higher than the temperatures at the time of drying and hardening, therefore the residual moisture or solvent expands volumetrically and evaporates, at which point this expansion, etc. works to cut open the weak portions of the surface part of the already hardened ceramic adhesive layer, creating new cracks. The cause of such losses in airtightness occurring during practical use was ascertained by the inventors.

0014 I.e. when ceramic adhesive is used for the assembly of solid oxide fuel cell system, it is not able to withstand the rise in temperature which occurs during the fuel cell startup step given the drying and hardening state found in general use. To reduce residual moisture or solvents in the interior of the ceramic adhesive layer to a state such that it can withstand the temperature rise during the startup step requires additional time for slow and sufficient drying to occur. Given these causes, extremely long times are required for the assembly of solid oxide fuel cell system in which ceramic adhesives are used, making their practical use extremely difficult.

0015 Therefore the invention has the object of providing a solid oxide fuel cell system in which fuel cells within a fuel cell module are connected in an airtight manner using ceramic adhesive.

### Means for Resolving Problems

0016 In order to resolve the above described problem, the invention is a solid oxide fuel cell system according to claim 1.

0017 In the invention thus constituted, multiple fuel cells housed within a fuel cell module are affixed in an airtight manner by ceramic adhesive to an affixing member constituting the fuel gas dispersion chamber. A gas leak suppression portion for suppressing the occurrence of cracks caused by shrinkage when ceramic adhesive hardens is formed around each of the fuel cells by a layer of ceramic adhesive. Supplied fuel is distributed to each of the fuel cells through the fuel gas dispersion chamber.

0018 In the invention thus constituted, a gas leak suppression portion is formed by ceramic adhesive around each of the fuel cells, therefore leakage of fuel gas can be reliably suppressed in the parts surrounding the fuel cells where gas leakage is most likely to occur and where the effects of leakage are most serious. The occurrence of fuel depletion caused by fuel gas leakage at the joining portions between fuel cells and affixing members, as well as problems such anomalous combustion of fuel leaking to the oxidant gas electrode side, can thus be suppressed.

0019 In the invention, an outer circumferential surface of each of the fuel cells is preferably adhered to the affixing member using the ceramic adhesive, and the gas leak suppression portion is constituted by forming the layer of the ceramic adhesive in a surrounding part of each of the fuel cells more thickly than in other parts.

0020 In the invention thus constituted, by forming and hardening ceramic adhesive pools in the surrounding area of fuel cells when the ceramic adhesive is being adhered, the ceramic adhesive layer in the gas leak suppression area is formed to be thicker than in other parts so as to compensate for the shrinkage portion. By this means, even if the adhered ceramic adhesive shrinks during hardening and this shrinkage concentrates around slow-hardening cell units, gaps associated with cracking or peeling between fuel cells are reliably avoided, and airtightness in joint portions can be obtained. Also, because the ceramic adhesive layer is thicker, cracks in the ceramic adhesive layer can be reliably suppressed in the area surrounding the cell units, and more reliable airtightness can be secured.

0021 In the invention, a passage through which gas passes is preferably formed inside each of the fuel cells, and the outer circumferential surface of the fuel cell surrounding the passage is affixed to the affixing member via the gas leak suppression portion, so that when the ceramic adhesive is hardened, the hardening of the ceramic adhesive is more gradual in a surrounding part of each of the fuel cells than in other parts, and cracking in the gas leakage suppression portion is suppressed.

0022 In general, the volume of ceramic adhesives shrinks during hardening. Therefore the border portion, which is the part of the coated ceramic adhesive which hardens first, cracks by being pulled by the shrinkage of adhesive surrounding the later-hardening portion. In the invention thus constituted, passages are formed inside the fuel cells, and material with a low coefficient of thermal conductivity forms the fuel cells, therefore the surrounding area of each of the fuel cells is unlikely to reach high temperatures when the ceramic adhesive is being dried. As a result, hardening of the ceramic adhesive in the area surrounding each of the fuel cells is made gradual, and adhesive in the gas leak prevention portion hardens later, so that cracking is less likely to occur in the gas leak suppression portion, and fuel gas leaks can be suppressed.

0023 In the invention, each of the fuel cells is preferably cylindrical, and the gas leak suppression portion is formed on the outer circumferential surface of each of the fuel cells.

In the invention, because each of the fuel cells is cylindrical and the gas leak suppression portion on the outer perimeter thereof is ring-shaped, hardening of the ceramic adhesive in this portion proceeds essentially uniformly. This reduces the likelihood of stress concentration caused by the shrinkage associated with hardening of ceramic adhesive, so that the occurrence of cracks in the gas suppression portion, and fuel gas leaks, can be suppressed.

0024 The invention preferably further comprises a plate covering the part of the ceramic adhesive away from the surrounding part of each of the fuel cells, wherein the plate makes hardening of the ceramic adhesive in the surrounding parts of the fuel cells more gradual.

0025 In the invention thus constituted, the portion away from the surrounding part of the fuel cells is covered by a plate, therefore localized drying of the covered portion of the ceramic adhesive surface can be prevented and the occurrence of cracking suppressed.

0026 In the invention, the plate is preferably formed of a material with a higher coefficient of thermal conductivity than the fuel cells.

In the invention thus constituted, the plate is formed of a material having a higher coefficient of thermal conductivity than the fuel cells, therefore the covered part of the plate dries essentially uniformly, and the occurrence of cracking can be suppressed. In contrast, ceramic adhesive on the surrounding portion of each of the fuel cells not covered by the plate is positioned close to the low-coefficient of thermal conductivity fuel cells, therefore drying is relatively gradual and the occurrence of cracking is suppressed.

0027 In the invention the gas leak suppression portion is preferably formed by mounting the plate onto the ceramic adhesive adhered to the affixing member when each of the fuel cells is being adhered, so the ceramic adhesive prior to hardening is pressed into the surrounding part of each of the fuel cells.

0028 In the invention thus constituted, the plate is mounted on ceramic adhesive prior to hardening, and the ceramic adhesive is pressed into the surrounding portion of the fuel cells, thereby forming a gas leak suppression portion. Ceramic adhesive pools can thus be formed on the surrounding portions of fuel cells using a simple structure, thereby forming a gas leak suppression portion.

0029 In the present invention, the affixing member and the plate preferably respectively have insertion holes at a predetermined spacing for the insertion of the fuel cells, and perimeter walls are formed to surround the insertion holes on the edge portions of each insertion hole disposed on the affixing member or the plate.

0030 In the invention thus constituted, perimeter walls are formed on the edge portion of each insertion hole disposed on the affixing members or the plate, therefore ceramic adhesive pushed out by the mounting of the plate can be held well at the perimeter portion of a greater number of fuel cells, and airtightness can be more reliably obtained.

0031 In the invention, a plate is preferably disposed on the ceramic adhesive adhering to each of the fuel cells so as to cover the filled-in ceramic adhesive, thereby suppressing the occurrence of cracking during hardening of the ceramic adhesive.

0032 In the invention thus constituted, a ceramic adhesive is filled into the joint portion at which fuel cells are adhered, and a plate is disposed so as to cover this ceramic adhesive. This plate suppresses the occurrence of cracks when the filled in ceramic adhesive hardens.

0033 In the invention thus constituted, a plate is disposed so as to cover filled-in ceramic adhesive, therefore vaporization of moisture or solvent from the portion covered by the plate on the filled-in ceramic adhesive surface is suppressed. As a result, the occurrence of cracking caused by the earlier hardening of the surface part of the ceramic adhesive and later vaporization of internal moisture or solvents can be suppressed. Thus ceramic adhesive can be used to mutually join members in an airtight manner.

0034 In the invention, the ceramic adhesive is preferably hardened by a dehydration condensation reaction, and the plate is mounted on the filled-in ceramic adhesive so as to expose the vicinity of a surrounding part of the fuel cells being adhered, so that at the time of ceramic adhesive hardening, the ceramic adhesive prior to hardening is pressed out to the vicinity of the surfaces of the fuel cells being adhered from the parts on which the pate is mounted, and the amount of ceramic adhesive increases close to the surface of fuel cells being adhered.

0035 In the invention thus constituted, ceramic adhesive prior to hardening is pressed out to the vicinity of the surfaces of the adhered fuel cells from the parts on which the plate is mounted, and the amount of ceramic adhesive increases close to the surface of fuel cells. As a result, even if the volume contracts and so-called "shrinking" occurs when the ceramic adhesive is hardened, the occurrence of gaps can be prevented at the joining portions where the ceramic adhesive is filled in. Also, the plate is mounted in such a way that vicinity of the surface of each of the fuel cells is exposed. As a result, moisture contained in the part of the ceramic adhesive covered by the plate evaporates through the exposed portion of the surface vicinity of each fuel cell. Drying and hardening of the ceramic adhesive in the portion at the surface region of each fuel cell thus is made gradual, and the occurrence of cracking is suppressed.

0036 In the invention, plurality of the fuel cells are preferably affixed by ceramic adhesive to the affixing member, and by injecting ceramic adhesive onto the affixing member with the fuel cells inserted into insertion holes formed in the affixing member, and gaps between the outer circumferential surface of the fuel cells and the insertion holes are filled in by ceramic adhesive, and the fuel cells are affixed to the affixing member.

0037 In the invention thus constituted, multiple fuel cells are affixed by the injection of ceramic adhesive while inserted into each of insertion holes on affixing members, therefore multiple fuel cells can be affixed in a single step, thereby enabling productivity to be improved. Since fuel cells generally have a low coefficient of thermal conductivity, the temperature of ceramic adhesive in the vicinity of the fuel cells is low when the ceramic adhesive he is dried and hardened by heating. As a result, drying and hardening of the ceramic adhesive in the portion at the surface region of each fuel cell is made gradual, and the occurrence of cracking is suppressed.

0038 In the present invention the plate preferably has plurality of insertion holes for the insertion of the fuel cells; the plate is disposed on the ceramic adhesive which has been injected onto the affixing members, and a generally uniform gap is formed between the insertion holes in the plate and the outer perimeter surface of the fuel cells.

0039 In the invention thus constituted, a gap is formed between each of the insertion holes on the plate and the outer circumferential surface of the fuel cells, therefore ceramic adhesive in the region of the outer circumferential surface of the fuel cells is exposed. As a result, moisture contained in the part of the ceramic adhesive covered by the plate evaporates through the exposed portion of the outer circumferential surface vicinity of each fuel cell. Drying and hardening of the ceramic adhesive in the portion at the surface region of each fuel cell thus is made gradual, and the occurrence of cracking is suppressed, and the fuel cells can be affixed while securing airtightness.

0040 In the invention, at the time of hardening, the ceramic adhesive pressed out prior to hardening from beneath the plate by the weight of the plate is filled into the gap between each of the insertion holes in the plate and the outer perimeter surface of the fuel cells.

0041 In the invention thus constituted, ceramic adhesive pressed out from beneath the plate is filled into the gap between the insertion holes in the plate and the fuel cells, so that adhesive pools can be formed around the fuel cells using a simple structure. As result, even in cases where "shrinkage" has occurred during hardening of the ceramic adhesive, gaps can be prevented from occurring around the fuel cells.

0042 In the present invention, perimeter walls are preferably formed to surround the insertion holes on the edge portions of each insertion hole disposed on the plate.

In the invention thus constituted, perimeter walls are formed on the edge portions of each insertion hole disposed on a plate, therefore it is difficult for ceramic adhesive filled into the gap between the plate insertion holes and the fuel cells to flow out from the insertion holes in the plate. As a result, large amounts of ceramic adhesive can be pooled in adhesive pools around the fuel cells, and the occurrence of gaps caused by "shrinkage" can be reliably prevented.

### Effect of the Invention

0043 With the solid oxide fuel cell system of the invention, fuel cells inside the fuel cell module can be joined in an airtight manner using ceramic adhesive.

### Brief Description of Figures

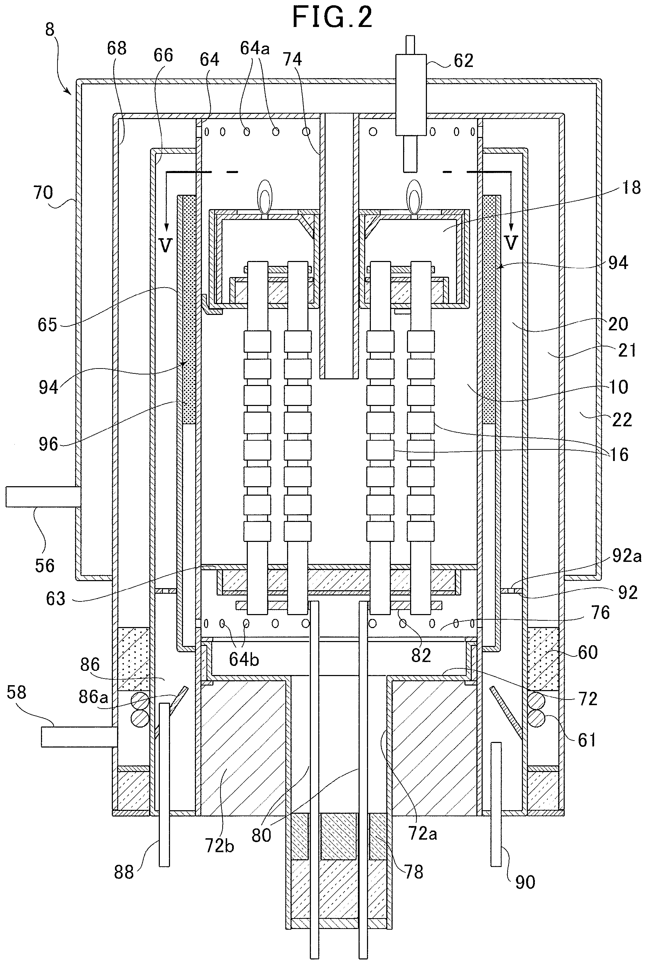

0044
Fig. 1
   An overview schematic showing a solid oxide fuel cell (SOFC) system according to an embodiment of the invention.
Fig. 2
   A cross-section of a housing container for fuel cells in a solid oxide fuel cell system according to an embodiment of the invention.
Fig. 3
   A cross-section showing an exploded view of the main members of a housing container for fuel cells in a solid oxide fuel cell system according to an embodiment of the invention.
Fig. 4
   A cross-section showing an expanded view of an exhaust collecting chamber built into a solid oxide fuel cell system according to an embodiment of the invention.
Fig. 5
   A cross section through V-V in Fig. 2.
Fig. 6
   (a) A cross-section showing an expanded view of the bottom end portion of fuel cells on which the bottom end is a cathode; (b) A cross-section showing an expanded view of the bottom end portion of fuel cells on which the bottom end is an anode.
Fig. 7
   A schematic showing a manufacturing procedure for a solid oxide fuel cell system according to an embodiment of the invention.
Fig. 8
   A schematic showing a manufacturing procedure for a solid oxide fuel cell system according to an embodiment of the invention.
Fig. 9
   A schematic showing a manufacturing procedure for a solid oxide fuel cell system according to an embodiment of the invention.
Fig. 10
   A schematic showing a manufacturing procedure for a solid oxide fuel cell system according to an embodiment of the invention.
Fig. 11
   A schematic showing a manufacturing procedure for a solid oxide fuel cell system according to an embodiment of the invention.
Fig. 12
   A schematic showing a manufacturing procedure for a solid oxide fuel cell system according to an embodiment of the invention.
Fig. 13
   A schematic showing a manufacturing procedure for a solid oxide fuel cell system according to an embodiment of the invention.
Fig. 14
   A schematic showing a manufacturing procedure for a solid oxide fuel cell system according to an embodiment of the invention.
Fig. 15
   A schematic showing a manufacturing procedure for a solid oxide fuel cell system according to an embodiment of the invention.
Fig. 16
   A schematic showing a manufacturing procedure for a solid oxide fuel cell system according to an embodiment of the invention.
Fig. 17
   A schematic showing a manufacturing procedure for a solid oxide fuel cell system according to an embodiment of the invention.
Fig. 18
   A schematic showing a manufacturing procedure for a solid oxide fuel cell system according to an embodiment of the invention.
Fig. 19
   A schematic showing a manufacturing procedure for a solid oxide fuel cell system according to an embodiment of the invention.
Fig. 20
   A schematic showing a manufacturing procedure for a solid oxide fuel cell system according to an embodiment of the invention.
Fig. 21
   A schematic showing a manufacturing procedure for a solid oxide fuel cell system according to an embodiment of the invention.
Fig. 22
   A plan view of a cover member disposed on injected ceramic adhesive in a solid oxide fuel cell system according to an embodiment of the invention.
Fig. 23
   A perspective view of a cover member disposed on injected ceramic adhesive in a solid oxide fuel cell system according to an embodiment of the invention.
Fig. 24
   A flowchart showing the manufacturing procedure for a solid oxide fuel cell system according to an embodiment of the invention.
Fig. 25
   A cross-section showing an expanded view of the adhering portion to a bottom piece of a fuel cell collecting chamber.
Fig. 26
   A graph illustrating an example of temperature control within a drying oven in a workable hardening step and a solvent elimination and hardening step in a solid oxide fuel cell system according to an embodiment of the invention.
Fig. 27
   A photograph showing an example of adhesion of an fuel cell using ceramic adhesive in a normal adhesion method.
Fig. 28
   A diagram showing a first solvent removal and hardening step in a variant example of a solid oxide fuel cell system according to an embodiment of the invention.
Fig. 29
   A diagram showing a second solvent removal and hardening step in a variant example of a solid oxide fuel cell system according to an embodiment of the invention.
Fig. 30
   A diagram explaining a heating method in a second solvent elimination and hardening step.

### Embodiments of the Invention

0045 Next, referring to the attached drawings, we discuss a solid oxide fuel cell (SOFC) system according to an embodiment of the present invention.

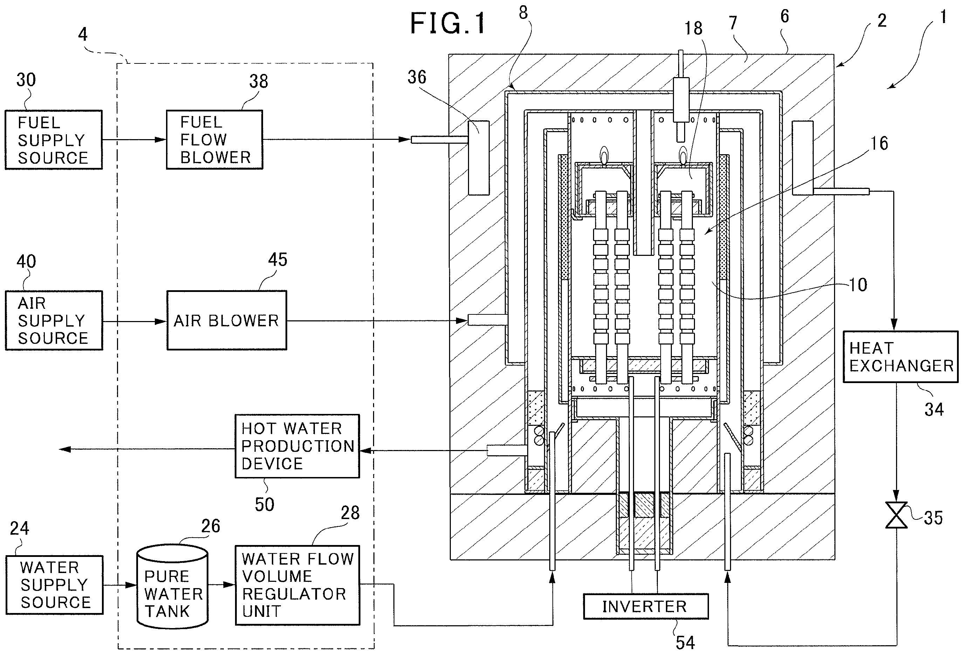

Fig. 1 is an overview diagram showing a solid oxide fuel cell (SOFC) system according to an embodiment of the present invention. As shown in Fig. 1, the solid oxide fuel cell (SOFC) system of this embodiment of the present invention is furnished with a fuel cell module 2 and an auxiliary unit 4.

0046 Fuel cell module 2 comprises a fuel cell housing container 8; is formed within this housing 6, mediated by thermal insulation 7. A generating chamber 10 is formed on the interior of this fuel cell housing container 8; multiple fuel cells 16 are concentrically disposed within this generating chamber 10, and the generating reaction between fuel gas and air, which is the oxidizing gas, is carried out by these fuel cells 16.

0047 An exhaust collection chamber 18 is attached to the top end portion of each fuel cell 16. Residual fuel (off-gas), unused for the generating reaction and remaining in each fuel cell 16, is collected in the exhaust collection chamber 18 attached to the top end portion and flows out of the multiple jet openings placed in the ceiling surface of exhaust collection chamber 18. Out flowing fuel is combusted in generating chamber 10 using remaining air not used for generation, thereby producing exhaust gas.

0048 Next, auxiliary unit 4 comprises pure water tank 26, which stores water from water supply source 24 and uses a filter to produce pure water, and water flow volume regulator unit 28 (a motor-driven "water pump" or the like), being a water supply apparatus, which regulates the flow volume of water supplied from this pure water tank. Also, auxiliary unit 4 comprises a fuel blower 38 (a motor-driven "fuel pump" or the like), being a fuel supply apparatus, for regulating the flow volume of hydrocarbon raw fuel gas supplied from fuel supply source 30, such as municipal gas.

0049 Note that raw fuel gas which is passed through fuel blower 38 is introduced into the interior of fuel cell housing container 8 through the desulfurizer 36, heat exchanger 34, and electromagnetic valve 35 in fuel cell module 2. The desulfurizer 36 is disposed in a ring shape around fuel cell housing container 8, and operates to remove sulfur from raw fuel gas. Heat exchanger 34 is provided to prevent degradation of electromagnetic valve 35 when high-temperature raw fuel gas heated in desulfurizer 36 flows directly into electromagnetic valve 35. Electromagnetic valve 35 is provided in order to stop the supply of raw fuel gas into fuel cell housing container 8.

0050 Auxiliary unit 4 comprises a generating air flow regulator unit 45 (a motor driven "air blower" or the like), being an oxidant gas supply apparatus, for regulating the flow volume of air supplied from air supply source 40.

0051 In addition, auxiliary unit 4 is equipped with a hot water production device 50 for recovering the heat in exhaust gas from fuel cell module 2. Tap water is supplied to hot water production device 50; this tap water is converted to hot water by the heat from exhaust gas, and is supplied to an external hot water tank, not show.

In addition, connected to fuel cell module 2 is an inverter 54, being a power extraction section (power conversion section) for supplying electricity generated by fuel cell module 2 to the outside.

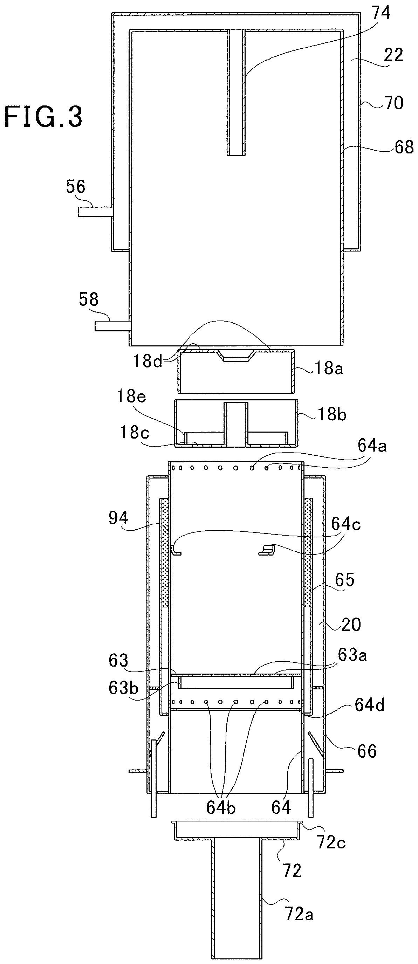

0052 Next, referring to Figs. 2 and 3, we explain the internal structure of a fuel cell housing container built into the fuel cell module of a solid oxide fuel cell (SOFC) system according to an embodiment of the invention. Fig. 2 is a cross-section of a fuel cell housing container, and Fig. 3 is a cross-section showing exploded view of main members of a fuel cell housing container.

As shown in Fig. 2, multiple fuel cells 16 are concentrically arrayed in the space within fuel cell housing container 8, and fuel gas supply flow path 20, exhaust gas discharge flow path 21, and oxidant gas supply flow path 22 are concentrically arranged in that order so as to surround the periphery thereof. Here, exhaust gas discharge flow path 21 and oxidant gas supply flow path 22 function as an oxidant gas flow path for supplying/discharging oxidant gas.

0053 First, as shown in Fig. 2, fuel cell housing container 8 is an approximately cylindrical steel container, to the side surface of which are connected a oxidant gas introducing pipe 56, being an oxidant gas introduction port for supplying generating air, and exhaust gas exhaust pipe 58 for discharging exhaust gas. In addition, an ignition heater 62 for igniting residual fuel flowing out from exhaust collection chamber 18 protrudes from the top in surface of fuel cell housing container 8.

0054 As shown in Figs. 2 and 3, within fuel cell housing container 8, inside cylindrical member 64, external cylindrical member 66, inside cylindrical container 68, and external cylindrical container 70, being constituent members of the generating chamber, are disposed in that order starting from the inside so as to surround the periphery of exhaust collection chamber 18. The above-described fuel gas supply flow path 20, exhaust gas discharge flow path 21, and oxidant gas supply flow path 22 respectively constitute flow paths between the cylindrical members and cylindrical containers, wherein heat exchange is carried out between adjacent flow paths. I.e., exhaust gas discharge flow path 21 is disposed so as to surround fuel gas supply flow path 20, and oxidant gas supply flow path 22 is disposed so as to surround exhaust gas discharge flow path 21. The open space at the bottom end of fuel cell housing container 8 is blocked off by dispersion chamber bottom member 72, which forms the bottom surface of fuel gas dispersion chamber 76 for dispersing fuel into each fuel cell 16.

0055 The inside cylindrical member 64 is an approximately cylindrical hollow body, the top and bottom ends of which are open. First affixing member 63, being a dispersion chamber-forming plate, is welded in an airtight manner to the interior wall surface of inside cylindrical member 64. A fuel gas dispersion chamber 76 is defined by the bottom surface of this first affixing member 63, the inside wall surface of inside cylindrical member 64, and the top surface of dispersion chamber bottom member 72. Multiple insertion holes 63a, into which fuel cells 16 are inserted, are formed on first affixing member 63, and each fuel cell 16 is adhered to first affixing member 63 by ceramic adhesive, with the fuel cells 16 inserted into each of the insertion holes 63a.Thus in a solid oxide fuel cell system 1 of the embodiment, ceramic adhesive is filled into the mutual joining portions between members constituting fuel cell module 2, and with hardening, each of the members is mutually joined in an airtight manner.

0056 External cylindrical member 66 is a cylindrical pipe disposed on the periphery of inside cylindrical member 64, formed in an approximately analogous shape to inside cylindrical member 64 so that a ring-shaped flow path is formed between external cylindrical member 66 and inside cylindrical member 64. In addition, an intermediate cylindrical member 65 is disposed between inside cylindrical member 64 and external cylindrical member 66. Intermediate cylindrical member 65 is a cylindrical pipe disposed between inside cylindrical member 64 and external cylindrical member 66, and a reforming section 94 is constituted between the outside circumferential surface of inside cylindrical member 64 and the inside circumferential surface of intermediate cylindrical member 65. Also, the ring-shaped space between the outer circumferential surface of intermediate cylindrical member 65 and the inner circumferential surface of external cylindrical member 66 functions as a fuel gas supply flow path 20. Therefore reforming section 94 and fuel gas supply flow path 20 receive the heat from combustion of residual fuel at the top end of exhaust collection chamber 18 in the fuel cells 16. The top end portion of inside cylindrical member 64 and top end portion of external cylindrical member 66 are joined in an airtight manner by welding, while the top end of fuel gas supply flow path 20 is closed off. Also, the bottom end of intermediate cylindrical member 65 and the outer peripheral surface of inside cylindrical member 64 are joined in an airtight manner by welding.

0057 Inside cylindrical container 68 is a cup-shaped member with a circular cross section disposed on the periphery of external cylindrical member 66, the side surface of which is formed in an approximately analogous shape to external cylindrical member 66, so that a ring-shaped flow path of an essentially fixed width is formed between inside cylindrical container 68 and external cylindrical member 66. This inside cylindrical container 68 is disposed so as to cover the open portion at the top end of inside cylindrical member 64. The ring-shaped space between the outer circumferential surface of external cylindrical member 66 and the inner circumferential surface of inside cylindrical container 68 functions as exhaust gas discharge flow path 21 (Fig. 2). This exhaust gas discharge flow path 21 communicates with the space on the inside of inside cylindrical member 64 through multiple small holes 64a provided on the top in surface of inside cylindrical member 64. An exhaust gas exhaust pipe 58, being an exhaust gas outflow opening, is connected to the bottom surface of inside cylindrical container 68, and exhaust gas discharge flow path 21 communicates with exhaust gas exhaust pipe 58.

0058 A combustion catalyst 60 and sheath heater 61 for heating same is disposed at the bottom portion of exhaust gas discharge flow path 21.

Combustion catalyst 60 is a catalyst filled into the ring-shaped space between the outer circumferential surface of external cylindrical member 66 and the inner circumferential surface of inside cylindrical container 68, above exhaust gas exhaust pipe 58. By passing through combustion catalyst 60, carbon monoxide is removed from exhaust gas descending the exhaust gas discharge flow path 21 and discharged from exhaust gas exhaust pipe 58.

Sheath heater 61 using electrical heater attached so as to surround the outer circumferential surface of external cylindrical member 66 underneath combustion catalyst 60. When solid oxide fuel cell system 1 is started, combustion catalyst 60 is heated to an activation temperature by turning on electricity to sheath heater 61.

0059 External cylindrical container 70 is a cup-shaped member with a circular cross section disposed on the periphery of inside cylindrical container 68, the side surface of which is formed in an approximately analogous shape to inside cylindrical container 68, so that a ring-shaped flow path of an essentially fixed width is formed between external cylindrical container 70 and inside cylindrical container 68. The ring-shaped space between the outer circumferential surface of inside cylindrical container 68 and the inner circumferential surface of external cylindrical container 70 functions as oxidant gas supply flow path 22. Oxidant gas introducing pipe 56 is connected to the bottom end surface of external cylindrical container 70, and oxidant gas supply flow path 22 communicates with oxidant gas introducing pipe 56.

0060 Dispersion chamber bottom member 72 is an approximately plate-shaped member, affixed in an airtight manner with ceramic adhesive to the inside wall surface of inside cylindrical member 64. A fuel gas dispersion chamber 76 is thus constituted between first affixing member 63 and dispersion chamber bottom member 72. Also, insertion pipe 72a for the insertion of bus bars 80 (Fig. 2) is provided at the center of dispersion chamber bottom member 72. Bus bars 80, electrically connected to each fuel cell 16, are drawn out to the outside of fuel cell housing container 8 through this insertion pipe 72a. Ceramic adhesive is filled into insertion pipe 72a, thereby securing the airtightness of exhaust gas collection chamber 78. In addition, thermal insulation 72b (Fig. 2) is disposed around the periphery of insertion pipe 72a.

0061 A circular cross section oxidant gas jetting pipe 74 for jetting generating air is attached so as to hang down from the ceiling surface of inside cylindrical container 68. This oxidant gas jetting pipe 74 the extends in the vertical direction on the center axial line of inside cylindrical container 68, and each fuel cell 16 is disposed on concentric circles around oxidant gas jetting pipe 74. By attaching the top end of oxidant gas jetting pipe 74 to the ceiling surface of inside cylindrical container 68, oxidant gas supply flow path 22, formed between inside cylindrical container 68 and external cylindrical container 70, is made to communicate with oxidant gas jetting pipe 74. Air supplied via oxidant gas supply flow path 22 is jetted downward from the tip of oxidant gas jetting pipe 74, hitting the top surface of first affixing member 63 and spreading to the entire interior of generating chamber 10.

0062 Fuel gas dispersion chamber 76 is a cylindrical airtight chamber, constituted between first affixing member 63 and dispersion chamber bottom member 72, on the top surface of which each fuel cell 16 is closely arrayed. The inside fuel electrode of each fuel cell 16 attached to the top surface of first affixing member 63 communicates with the interior of fuel gas dispersion chamber 76.The bottom end portion of each fuel cell 16 penetrates the insertion holes 63a in first affixing member 63 and protrudes into fuel gas dispersion chamber 76, so that each fuel cell 16 is affixed by adhesion to first affixing member 63.

0063 As shown in Fig. 2, multiple small holes 64b are formed in inside cylindrical member 64 below first affixing member 63. The space between the outer perimeter of inside cylindrical member 64 and the inner perimeter of intermediate cylindrical member 65 communicates with the inside of fuel gas dispersion chamber 76 through multiple small holes 64b. Supplied fuel first rises through the space between the inside perimeter of external cylindrical member 66 and the outside perimeter of intermediate cylindrical member 65, then descends through the space between the outside perimeter of inside cylindrical member 64 and the inside perimeter of intermediate cylindrical member 65, flowing into fuel gas dispersion chamber 76 through the multiple small holes 64b. Fuel gas which has flowed into fuel gas dispersion chamber 76 is distributed to each fuel cell 16 attached to the ceiling surface of fuel gas dispersion chamber 76 (first affixing member 63).

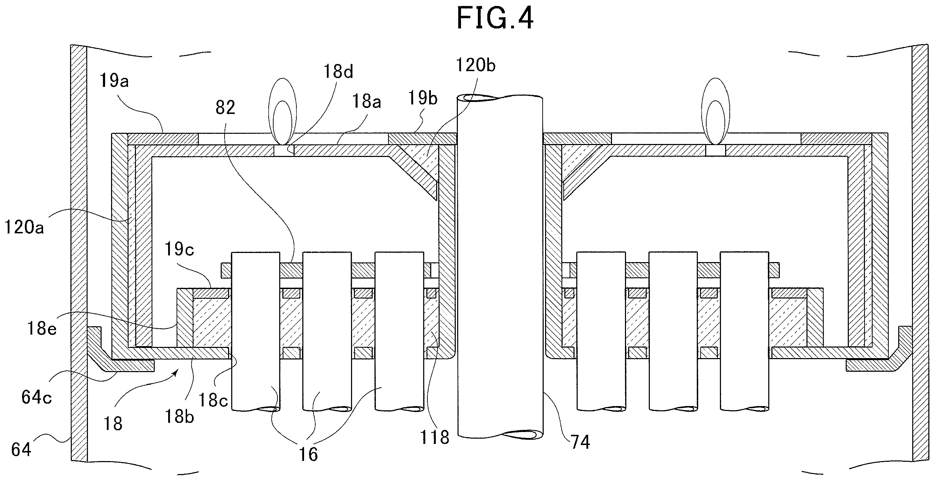

0064 In addition, the bottom end portions of each fuel cell 16 protruding into fuel gas dispersion chamber 76 are electrically connected to bus bars 80 inside fuel gas dispersion chamber 76, and electoral power is extracted to the outside through insertion pipe 72a. Bus bars 80 are elongated metal conductors for extracting power produced by each fuel cell 16 to the outside of fuel cell housing container 8, affixed to dispersion chamber bottom member 72 insertion pipe 72a through insulator 78. Bus bars 80 are electrically connected to a power collector 82 attached to each fuel cell 16 on the interior of fuel gas dispersion chamber 76. Bus bars 80 are connected to inverter 54 (Fig. 1) on the exterior of fuel cell housing container 8. Note that power collector 82 is also attached to the top and portions of each fuel cell 16 protruding into exhaust collection chamber 18 (Fig. 4). Multiple fuel cells 16 are electrically connected in parallel by these top and bottom end portion electrical power collectors 82, and multiple sets of parallel-connected fuel cells 16 are electrically connected in series, and both ends of these series connections are connected to the respective bus bars 80.

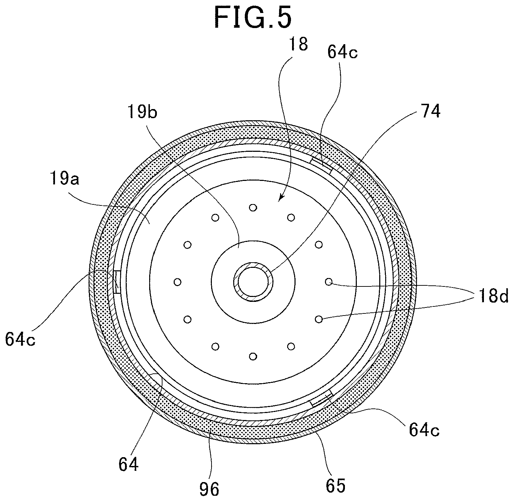

0065 Next, referring to Figs. 4 and 5, we explain the constitution of the exhaust collection chamber.

Fig. 4 is a cross-section showing an expanded view of part of the exhaust collection chamber, and Fig. 5 is a cross-section through V-V in Fig. 2.

As shown in Fig. 4, exhaust collection chamber 18 is a chamber with a doughnut-shaped cross-section attached to the top end portion of each fuel cell 16; oxidant gas jetting pipe 74 penetrates and extends at the center of this exhaust collection chamber 18.

0066 As shown in Fig. 5, three stays 64c are attached at equal spacing to the inside wall surface of inside cylindrical member 64 to support exhaust collection chamber 18. As shown in Fig. 4, stays 64c are small tabs of bent thin metal plate; by mounting exhaust collection chamber 18 on each of the stays 64c, exhaust collection chamber 18 is positioned concentrically with inside cylindrical member 64. Thus the gap between the outside circumferential surface of exhaust collection chamber 18 and the inside circumferential surface of inside cylindrical member 64, and the gap between the inside circumferential surface of exhaust collection chamber 18 and the outside circumferential surface of oxidant gas jetting pipe 74 are made uniform around the entire circumference (Fig. 5).

0067 Exhaust collection chamber 18 is constituted by joining collection chamber upper member 18a and collection chamber lower member 18b in an airtight manner.

Collection chamber lower member 18b is a round plate shaped member open at the top, at the center of which a cylindrical portion is provided to permit the penetration of oxidant gas jetting pipe 74.

Collection chamber upper member 18a is a round plate shaped member open at the bottom, at the center of which an opening is provided to permit the penetration of oxidant gas jetting pipe 74. Collection chamber upper member 18a has a shape capable of insertion into the doughnut shaped cross-sectional region which opens at the top of collection chamber lower member 18b.

0068 Ceramic adhesive is filled into and hardened in the gap between the inner circumferential surface of the wall surrounding collection chamber lower member 18b and the outer circumferential surface of collection chamber upper member 18a, assuring airtightness in this joining portion. A large diameter seal 19a is disposed on the ceramic adhesive layer formed by the ceramic adhesive filled into this joint portion, covering the ceramic adhesive layer. The large diameter seal 19a is a ring-shaped thin plate, disposed to cover the filled-in ceramic adhesive layer after the ceramic adhesive is filled, and affixed to exhaust collection chamber 18 by the hardening of the adhesive.

0069 On the other hand, ceramic adhesive is also filled in and hardened between the outside circumferential surface of the cylindrical portion at the center of collection chamber lower member 18b and the edge of the opening portion at the center of collection chamber upper member 18a, assuring the airtightness of this joint portion. A small diameter seal 19b is disposed on the ceramic adhesive layer formed by the ceramic adhesive filled into this joint portion, covering the ceramic adhesive layer. The small diameter seal 19b is a ring-shaped thin plate, disposed to cover the filled-in ceramic adhesive layer after the ceramic adhesive is filled, and affixed to exhaust collection chamber 18 by the hardening of the adhesive.

0070 Multiple insertion holes 18c are formed on the bottom surface of collection chamber lower member 18b. The top end portions of each fuel cell 16 respectively penetrate each of the insertion holes 18c, and each fuel cell 16 penetrate each of the insertion holes 18c. Ceramic adhesive is flowed onto the bottom surface of collection chamber lower member 18b, which is penetrated by fuel cells 16; hardening of the adhesive fills in the gap between the outer perimeter of each fuel cell 16 and the insertion holes 18c in an airtight manner and results in the affixing of each fuel cell 16 to collection chamber lower member 18b.

0071 Furthermore, round, thin plate cover member 19c is disposed on the ceramic adhesive flowed into the bottom surface of collection chamber lower member 18b and affixed to collection chamber lower member 18b by the hardening of the ceramic adhesive. Multiple insertion holes are formed in cover member 19c at the same positions as each of the insertion holes 18c in collection chamber lower member 18b, and the top end portion of each fuel cell 16 penetrate and extend through these ceramic adhesive layer and cover member 19c.

0072 At the same time, multiple jet openings 18d for jetting collected fuel gas are formed in the ceiling surface of exhaust collection chamber 18 (Fig. 5). Each of the jet openings 18d is disposed in a circle on collection chamber upper member 18a. Fuel remaining unused for electrical generation flows out from the top end of each fuel cell 16 into exhaust collection chamber 18, and fuel collected inside exhaust collection chamber 18 flows out from jet openings 18d, where it is combusted.

0073 Next, referring to Fig. 2, we explain the structure for reforming raw fuel gas supplied from fuel supply source 30.

First, vaporization section 86 for vaporizing water for use in steam reforming is provided at the bottom portion of fuel gas supply flow path 20 formed between inside cylindrical member 64 and external cylindrical member 66. Vaporization section 86 comprises ring-shaped inclined plate 86a attached to the lower inside perimeter of external cylindrical member 66, and fuel gas flow path 88. Also, vaporization section 86 is disposed below oxidant gas introducing pipe 56 for introducing generating air, and above exhaust gas exhaust pipe 58 for discharging exhaust gas. Ring-shaped inclined plate 86a is a metal thin plate formed a ring shape, the outer circumferential edge of which is attached to the inside wall surface of external cylindrical member 66. At the same time, the inside perimeter edge of ring-shaped inclined plate 86a is positioned above the outside perimeter edge thereof, and a gap is provided between the inside perimeter edge of inclined plate 86a and the outside wall surface of inside cylindrical member 64.

0074 Water supply pipe 88 is a pipe extending vertically within fuel gas supply flow path 20 from the bottom end of inside cylindrical member 64; water for steam reforming supplied from water flow volume regulator unit 28 is supplied to vaporization section 86 through water supply pipe 88. The top end of water supply pipe 88 extends to the top surface side of inclined plate 86a, penetrating inclined plate 86a, and water supplied to the top surface side of inclined plate 86a pools between the top surface of inclined plate 86a and the inside wall surface of external cylindrical member 66. Water supplied to the top surface of inclined plate 86a is vaporized there, producing steam.

0075 A combustion gas introducing portion for introducing raw fuel gas into fuel gas supply flow path 20 is erected under vaporization section 86. Raw fuel gas fed from fuel blower 38 is introduced into fuel gas supply flow path 20 through fuel gas supply pipe 90. Fuel gas supply pipe 90 is a type extending vertically inside fuel gas supply flow path 20 from the bottom end of inside cylindrical member 64. The top end of fuel gas supply pipe 90 is positioned beneath inclined plate 86a. Raw fuel gas fed from fuel blower 38 is introduced at the bottom side of inclined plate 86a and rises to the top side of inclined plate 86a as its flow path is restricted by the slope of inclined plate 86a. Raw fuel gas rising to the top side of inclined plate 86a rises together with the steam produced by vaporization section 86.

0076 A fuel gas supply flow path partition 92 is erected above vaporization section 86 in fuel gas supply flow path 20. Fuel gas supply flow path partition 92 is a ring-shaped metal plate disposed to separate into top and bottom portions the ring-shaped space between the inside perimeter of external cylindrical member 66 and the outside perimeter of intermediate cylindrical member 65. Multiple equally spaced jet openings 92a are provided in a circle on fuel gas supply flow path partition 92, and the spaces above and below fuel gas supply flow path partition 92 communicate through these jet openings 92a. Raw fuel gas introduced from fuel gas supply pipe 90 and steam produced by vaporization section 86 are first pooled in the space on the bottom side of fuel gas supply flow path partition 92, then passed through each of the jet openings 92a and jetted into the space on the top side of fuel gas supply flow path partition 92. When jetted into the wide space on the top side of fuel gas supply flow path partition 92 from each of the jet openings 92a, the raw fuel gas and steam suddenly decelerate and sufficiently mix here.

0077 In addition, a reforming section 94 is erected on the top portion of the ring shaped space between the inside perimeter of intermediate cylindrical member 65 and the outside perimeter of inside cylindrical member 64. Reforming section 94 is disposed so as to surround the top portion of each fuel cell 16 and the perimeter of the exhaust collection chamber 18 at the top thereof. Reforming section 94 comprises a catalyst holding plate (not shown) attached to the outer wall surface of inside cylindrical member 64, and a reforming catalyst 96 held in place thereby.

0078 Thus when raw fuel gas and steam, mixed in the space over fuel gas supply flow path partition 92, makes contact with the reforming catalyst 96 filled into reforming section 94, the steam reforming reaction shown by Eq. (1) proceeds inside reforming section 94.

CₘHₙ + xH₂O→aCO₂ + bCO₂ + cH₂ (1)

0079 Fuel gas reformed in reforming section 94 flows downward in the space between the inside perimeter of intermediate cylindrical member 65 and the outside perimeter of inside cylindrical member 64, flowing into fuel gas dispersion chamber 76 to be supplied to each fuel cell 16. The steam reforming reaction is an endothermic reaction, however the heat required for the reaction is supplied by the combustion heat of off-gas flowing out from exhaust collection chamber 18 and the emitted heat produced in each fuel cell 16.

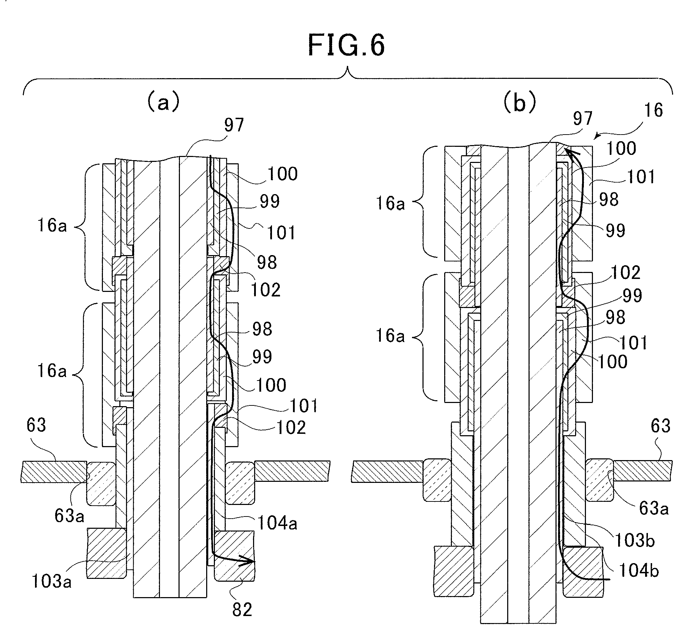

0080 Next, referring to Fig. 6, we explain fuel cells 16.

In the solid oxide fuel cell system 1 of the embodiment, cylindrical crossbar cells using solid oxides are adopted as the fuel cells 16. Multiple single cells 16a are arranged in crossbar form on each fuel cell 16, and a fuel cell 16 is constituted by electrically connecting these together in series. Each fuel cell 16 comprises an anode (positive electrode) at one end and a cathode (negative electrode) at the other end; of the multiple fuel cells 16, half are disposed so that the top end is an anode and the bottom end is a cathode, and the other half are disposed so that the top end is a cathode and the bottom end is an anode.

0081 Fig. 6 (a) is a cross-section showing an expanded view of the bottom end portion of fuel cells 16 on which the bottom end is a cathode; (b) is a cross-section showing an expanded view of the bottom end portion of fuel cells 16 on which the bottom end is an anode.

0082 As shown in Fig. 6, fuel cells 16 are formed from elongated, cylindrical porous support body 97, and multiple layers formed in a crossbar shape on the outside of this porous support body 97. Respectively formed in a crossbar shape surrounding porous support body 97 in the following order, starting from the inside, are: fuel electrode 98, reaction suppression layer 99, solid electrolyte layer 100, and air electrode 101. Therefore fuel gas supplied via fuel gas dispersion chamber 76 flows into the porous support body 97 of each fuel cell 16, and air jetted from oxidant gas jetting pipe 74 flows to the outside of air electrode 101. Each of the single cells 16a formed at the top of fuel cells 16 comprises a set made up of a fuel electrode 98, reaction suppression layer 99, solid electrolyte layer 100, and air electrode 101. The fuel electrode 98 in one single cell 16a is electrically connected to the air electrode 101 of the adjacent single cell 16a through interconnector layer 102. By this means, the multiple single cells 16a formed on a single fuel cell 16 are electrically connected in series.

0083 As shown in Fig. 6(a), at the cathode-side and portion of fuel cells 16, an electrode layer 103a is formed on the outer perimeter of porous support body 97, and a lead film layer 104a is formed on the outside of this electrode layer 103a. In the cathode-side end portion, the air electrode 101 and electrode layer 103a of single cells 16a positioned at the end portion are electrically connected by interconnector layer 102. This electrode layer 103a and lead film layer 104a are formed to penetrate first affixing member 63 at the end portion of fuel cells 16, and protrude further downward than first affixing member 63. Electrode layer 103a is formed further down than lead film layer 104a, and externally exposed power collector 82 is electrically connected to electrode layer 103a. Thus air electrode 101 of single cell 16a positioned at the end portion is connected to power collector 82 through interconnector layer 102 and electrode layer 103a, and electrical current flows as shown by the arrow in the diagram. Ceramic adhesive is filled into the gap between the edge of the insertion holes 63a on first affixing member 63 and lead film layer 104a, and fuel cells 16 are affixed to first affixing member 63 on the outer circumference of lead film layer 104a.

0084 As shown in Fig. 6(b), on the fuel cell 16 anode side end portion, a fuel electrode layer 98 in single cell 16a positioned at the end portion extends, and the extended portion of fuel electrode 98 functions as an electrode layer 103b. Lead film layer 104b is formed on the outside of electrode layer 103b. This electrode layer 103b and lead film layer 104b are formed to penetrate first affixing member 63 at the end portion of fuel cells 16, and protrude further downward than first affixing member 63. Electrode layer 103b is formed further down than lead film layer 104b, and externally exposed power collector 82 is electrically connected to electrode layer 103b. Thus the fuel electrode 98 of single cell 16a positioned at the end portion is connected to power collector 82 through integrally formed electrode layer 103b, and electrical current flows as shown by the arrow in the diagram. Ceramic adhesive is filled into the gap between the edge of the insertion holes 63a on first affixing member 63 and lead film layer 104b, and fuel cells 16 are affixed to first affixing member 63 on the outer circumference of lead film layer 104b.

0085 In Fig. 6 (a) and (b) we explained the constitution of the bottom and portion of each fuel cell 16; the top and portion of each fuel cell 16 is the same. Note that at the top end portion each fuel cell 16 is affixed to the collection chamber lower member 18b of exhaust collection chamber 18; the structure of the affixing part is the same as affixing to the first affixing member 63 at the bottom end portion.

0086 Next we explain the constitution of porous support body 97, and of each layer.

The porous support body 97 in the embodiment is formed by extruding and sintering a mixture of forsterite powder and the binder.

In the embodiment, fuel electrode 98 is an electrically conductive thin film comprised of a mixture of NiO powder and 10YSZ (10mol% Y₂O₃ - 90mol% ZrO₂ powder.

0087 In the embodiment, reaction suppression layer 99 is a thin film comprising cerium compound oxide (LDC 40; i.e., 40 mol% La₂O₃ - 60 mol% CeO₂) or the like, by which chemical reactions between fuel electrode 98 and solid electrolyte layer 100 are suppressed. I.e., it is a thin film constituted of 40mol% La₂O₃ -60mol% CeO₂.

In the embodiment, solid electrolyte layer 100 is a thin film comprising an LSGM powder composition of La_{.09} Sr_{0.1} Ga_{0.8} Mg_{0.2} O₃. Electrical energy is produced by the reaction between oxide ions and hydrogen or carbon monoxide through this solid electrolyte layer 100.

0088 In the embodiment, air electrode 101 is an electrically conductive thin film comprising a powder composition of La_{0.6} Sr_{0.4} Co_{0.8} Fe_{0.2} O₃.

In the embodiment, interconnector layer 102 is an electrically conductive thin film comprising SLT (lanthanum doped strontium titanate). Adjacent single cells 16a on fuel cells 16 are connected via interconnector layer 102.

In the embodiment, electrode layers 103a and 103b are formed of the same material as fuel electrode 98.

In the embodiment, lead film layers 104a and 104b are formed of the same material as solid electrolyte layer 100.

0089 Next, referring to Figs. 1 and 2, we discuss the operation of solid oxide fuel cell system 1.

First, in the startup step of solid oxide fuel cell system 1, fuel blower 38 is started, and power to the sheath heater 61 is started at the same time as the supply of fuel is started. By starting the power to sheath heater 61, the combustion catalyst 60 disposed above sheath heater 61 is heated, and vaporization section 86 disposed on the inside thereof is also heated. Fuel supplied by fuel blower 38 flows from fuel gas supply pipe 90 via desulfurizer 36, heat exchanger 34, and electromagnetic valve 35 into the interior of fuel cell housing container 8. In-flowing fuel, after rising up to the top end within fuel gas supply flow path 20, drops down within reforming section 94, then through small holes 64b placed on the bottom portion of inside cylindrical member 64, and into fuel gas dispersion chamber 76Note that immediately after the of solid oxide fuel cell system 1 startup step, because the temperature of reforming catalyst 96 in reforming section 94 has not risen sufficiently, no fuel reforming is performed.

0090 Fuel gas which has flowed into fuel gas dispersion chamber 76 flows through the inside (the fuel electrode side) of each of the fuel cells 16 attached to first affixing member 63 of fuel gas dispersion chamber 76 and into exhaust collection chamber 18. Note that immediately after startup of solid oxide fuel cell system 1, the temperature of each of the solid oxide fuel cell system 1 has not risen sufficiently, or power is not being extracted to inverter 54, therefore no electrical generating reaction is occurring.

0091 Fuel flowing into exhaust collection chamber 18 is jetted from exhaust collection chamber 18 jet openings 18d. Fuel jetted from jet openings 18d is ignited by ignition heater 62 and combusted. Reforming section 94, disposed around exhaust collection chamber 18, is heated by this combustion. Exhaust gas produced by combustion flows into exhaust gas discharge flow path 21 through small holes 64a formed in the top portion of inside cylindrical member 64. High temperature exhaust gas descends the interior of exhaust gas discharge flow path 21, heating fuel flowing in the fuel gas supply flow path 20 disposed on the inside thereof and generating air flowing in the oxidant gas supply flow path 22 disposed on the outside thereof. In addition, exhaust gas passes through the combustion catalyst 60 disposed within exhaust gas discharge flow path 21, whereby carbon monoxide is removed, then passes through exhaust gas exhaust pipe 58 to be discharged from fuel cell housing container 8.

0092 When vaporization section 86 is heated by exhaust gas and sheath heater 61, water for steam reforming supplied to vaporization section 86 is vaporized and steam is produced. Water for steam reforming is supplied by water flow volume regulator unit 28 to vaporization section 86 in fuel cell housing container 8 via water supply pipe 88. When steam is produced by vaporization section 86, fuel supplied through fuel gas supply pipe 90 is first held in the space on the bottom side of fuel gas supply flow path partition 92 inside fuel gas supply flow path 20, then jetted from multiple jet openings 92a formed in fuel gas supply flow path partition 92. Fuel and steam jetted with high force from jet openings 92a are well blended by being decelerated in the space on the top side of fuel gas supply flow path partition 92.

0093 Blended fuel and steam rise up within fuel gas supply flow path 20 and flow into reforming section 94. In a state whereby the reforming section 94 reforming catalyst 96 has risen to a temperature at which reforming is possible, a steam reforming reaction occurs when the mixed gas of fuel and steam passes through reforming section 94, and the mixed gas is reformed into a hydrogen-rich fuel. Reformed fuel passes through small holes 64b and flows into fuel gas dispersion chamber 76. A large number of small holes 64b are formed around fuel gas dispersion chamber 76, and sufficient capacity is thus assured for fuel gas dispersion chamber 76, therefore reformed fuel flows in uniformly to the fuel cells 16 with which it collides in the fuel gas dispersion chamber 76.

0094 At the same time air, which is the oxidant gas supplied by generating air flow regulator unit 45, flows into oxidant gas supply flow path 22 via oxidant gas introducing pipe 56. Air flowing into oxidant gas supply flow path 22 rises up in oxidant gas supply flow path 22 as it is heated by the exhaust gas flowing on the inside thereof. Air rising in oxidant gas supply flow path 22 is gathered at the center of the top end portion in fuel cell housing container 8 and flows into the oxidant gas jetting pipe 74 which communicates with oxidant gas supply flow path 22. Air flowing into oxidant gas jetting pipe 74 is jetted from the bottom end thereof into generating chamber 10; the jetted air then hits the top surface of first affixing member 63 and spreads throughout the entire generating chamber 10. Air flowing into generating chamber 10 rises up through the gap between the outer perimeter wall of exhaust collection chamber 18 and the inner perimeter wall of inside cylindrical member 64, and through the gap between the inside perimeter wall of exhaust collection chamber 18 and the outside circumferential surface of oxidant gas jetting pipe 74.

0095 At this point, a portion of the air passing over the exteriors (air electrode side) of each fuel cell 16 is used for the generating reaction. In addition, a portion of the air rising above exhaust collection chamber 18 is used to combust the fuel jetted from exhaust collection chamber 18 jet openings 18d. Exhaust gas produced by combustion and air not used for electrical generation or combustion passes through small holes 64a and flows into exhaust gas discharge flow path 21. Exhaust gas and air flowing into exhaust gas discharge flow path 21 is discharged after carbon monoxide is removed by combustion catalyst 60.

0096 Thus when each fuel cell 16 rises to approximately 650°C at which generation is possible, and reformed fuel flows into the interior (fuel electrode side) of each fuel cell 16 and air flows on the outside (air electrode side) thereof, a starting power is generated by chemical reaction. In this state, when inverter 54 is connected to bus bars 80 drawn out from fuel cell housing container 8, power is extracted from each fuel cell 16 and electrical generation is implemented.

0097 In solid oxide fuel cell system 1 of the embodiment, generating air is jetted from the oxidant gas jetting pipe 74 disposed at the center of generating chamber 10 and rises up through generating chamber 10 in the uniform gap between exhaust collection chamber 18 and inside cylindrical member 64 and in the uniform gap between exhaust collection chamber 18 and oxidant gas jetting pipe 74. Therefore the flow of air inside generating chamber 10 is an essentially completely axially symmetrical flow, and air flows homogeneously around each fuel cell 16. Temperature differences between fuel cells 16 are thereby suppressed, and a uniform starting power can be produced by each fuel cell 16.

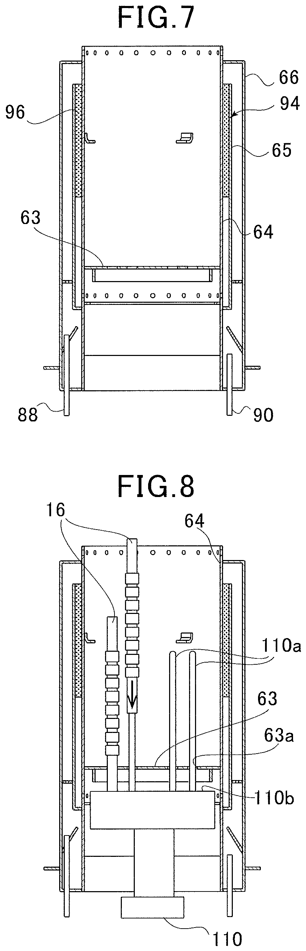

0098 Next, referring to Figs. 7 through 26, we explain a method for manufacturing solid oxide fuel cell system 1 according to an embodiment of the invention.

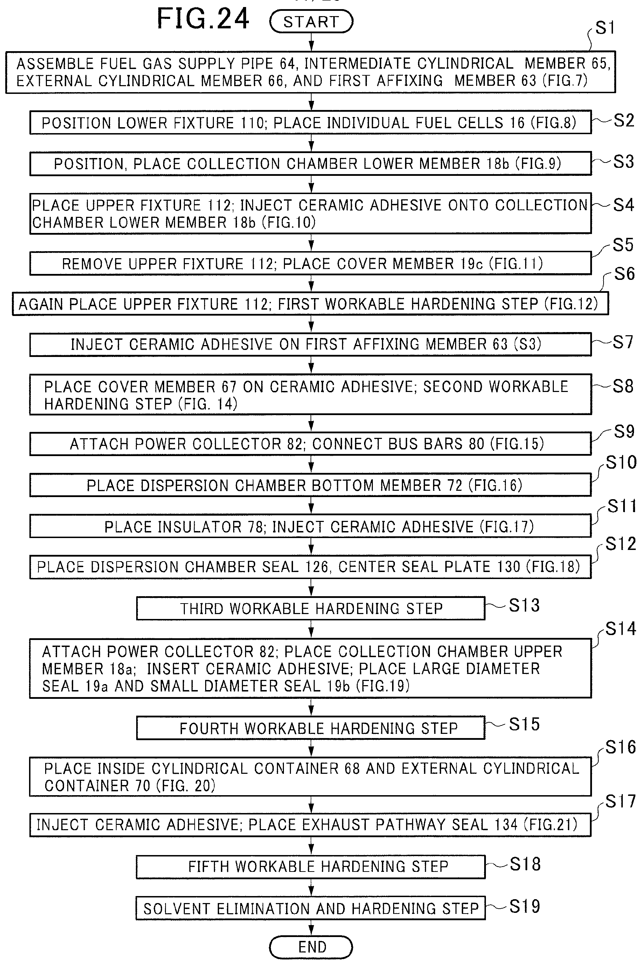

Figs. 7 through 21 are schematics showing the procedure for manufacturing solid oxide fuel cell system 1; for explanatory purposes the detailed constitution thereof is omitted. Fig. 24 is a flowchart showing the manufacturing procedure for solid oxide fuel cell system 1.

0099 First, as shown in Fig. 7, inside cylindrical member 64, intermediate cylindrical member 65, external cylindrical member 66, and first affixing member 63 are assembled by welding (step S1 in Fig. 24). Here first affixing member 63 is disposed so as to be perpendicular to the center axis line of inside cylindrical member 64, and the outer circumferential edge thereof is welded in an airtight manner to the inside wall surface of inside cylindrical member 64. In addition, reforming catalyst 96 is filled into the reforming section 94 provided between inside cylindrical member 64 and intermediate cylindrical member 65. Furthermore, water supply pipe 88 and fuel gas supply pipe 90 are also attached by welding.

0100 Next, as shown in Fig. 8, lower fixture 110, which is a first positioning device, is accurately positioned relative to inside cylindrical member 64 (step S2 in Fig. 24). Lower fixture 110 comprises multiple positioning shafts 110a extending upward, parallel to inside cylindrical member 64; these positioning shafts 110a are disposed to penetrate each of the insertion holes 63a formed in first affixing member 63 and extend. In addition, fuel cells 16 are respectively disposed on each of the positioning shafts 110a which penetrate insertion holes 63a and extend. In this step, each fuel cell 16 is inserted into each insertion hole 63a of first affixing member 63.

0101 By the insertion of positioning shafts 110a into fuel cells 16, one end portion of fuel cells 16 is positioned relative to positioning shafts 110a. Since lower fixture 110 is positioned relative to inside cylindrical member 64, one end of fuel cell 16 is accurately positioned relative to inside cylindrical member 64, a constituent of fuel cell module 2. Moreover, because the bottom end of each fuel cell 16 contacts the base end surface 110b of positioning shafts 110a, the bottom ends of all fuel cells 16 are positioned in the same plane. I.e., the projection length of each fuel cell 16 from first affixing member 63 is fixed. On the other hand, because there is variability in the lengths of fuel cells 16 due to manufacturing tolerances, the heights of the top ends of the fuel cells 16 are not perfectly uniform.

Therefore in this step, the one end of each fuel cell 16 inserted into each of the insertion holes 63a is positioned relative to the inside cylindrical member 64 that makes up fuel cell module 2.

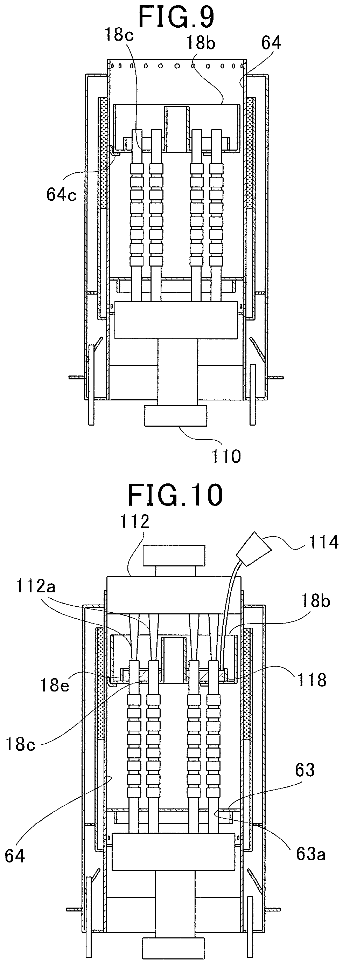

0102 Next, as shown in Fig. 9, collection chamber lower member 18b, which is a second affixing member and constituent of exhaust collection chamber 18, is positioned at the top end of fuel cell 16 (step S3 in Fig. 24). The three stays 64c, which are positioning members, are welded to the inside wall surface of inside cylindrical member 64. Each stay 64 comprises a parallel portion extending parallel to first affixing member 63, and is disposed at equal intervals on the inside wall surface of inside cylindrical member 64. When collection chamber lower member 18b is disposed on top of each stay 64c, collection chamber lower member 18b is dropped down to the parallel portion of each of the stays 64c and accurately positioned relative to inside cylindrical member 64, which makes up the inside wall surface of generating chamber 10. In this state, a uniform gap is formed between the inside circumferential surface of inside cylindrical member 64 and the outside circumferential surface of collection chamber lower member 18b. In this state, the top ends of fuel cells 16 are inserted to each of the insertion holes 18c in collection chamber lower member 18b, which constitutes the second affixing member, and the top ends of fuel cells 16 are upwardly protruded from the collection chamber lower member 18b.

0103 In addition, as shown in Fig. 10, a upper fixture 112, being a second positioning apparatus, is disposed at the top portion of inside cylindrical member 64 (Fig. 24, step S4). Upper fixture 112 comprises multiple truncated cones 112a extending downward, parallel to inside cylindrical member 64. The tips of truncated cones 112a are inserted into downward extending fuel cells 16, and the side surface of each of the truncated cones 112a contacts the top and portion of fuel cells 16. Since upper fixture 112 is correctly positioned relative to inside cylindrical member 64, the top ends of each of the fuel cells 16 are also correctly positioned relative to inside cylindrical member 64.

Therefore in this step, the other end of the fuel cells 16 inserted into insertion holes 18c of collection chamber lower member 18b is registered by upper fixture 112 relative to the inside cylindrical member 64, which constitutes fuel cell module 2.

0104 Thus the top end portion and bottom portion of each of the fuel cells 16 are accurately positioned relative to inside cylindrical member 64. In this state, an essentially fixed gap is formed between the outer circumferential surface of each fuel cell 16 and the insertion holes 18c in collection chamber lower member 18b, as well as the insertion holes 63a in first affixing member 63. I.e., each fuel cell 16 is positioned at a predetermined position relative to fuel cell module 2 (inside cylindrical member 64), in a state whereby each insertion hole 18c in collection chamber lower member 18b is separated by a predetermined distance from the edge portion of insertion hole 63a on first affixing member 63. A small curve is present in the fuel cells 16 due to manufacturing tolerances, however since fuel cells 16 are correctly positioned relative to fuel cell module 2 at the top and bottom ends, the gap between the outer circumferential surface of fuel cells 16 and each of the insertion holes can be made essentially uniform.

0105 Thus in a state whereby each of the fuel cells 16 is positioned, an adhesive applying step is implemented in which ceramic adhesive is injected onto collection chamber lower member 18b by an adhesive injection apparatus, being an adhesive application apparatus. An adhesive filling frame 18e extending in a ring shape to surround all of insertion holes 18c is disposed on collection chamber lower member 18b (Fig. 4). Adhesive injection apparatus 114 fills the inside of adhesive filling frame 18e which surrounds insertion holes 18c with adhesive and applies ceramic adhesive to the joint portion. The region surrounded by adhesive filling frame 18e on collection chamber lower member 18b functions as an adhesive receiving section. Ceramic adhesive is a viscous liquid which slides on collection chamber lower member 18b when injected, and its viscosity is adjusted to the level that an essentially uniform thickness of ceramic adhesive layer 118 can be formed on the inside of adhesive filling frame 18e. Injected ceramic adhesive does fill gaps, eve running into the gap between the outer circumferential surface of each of the fuel cells 16 and the insertion holes 18c, but is given a viscosity such that it will not run downward from these gaps.

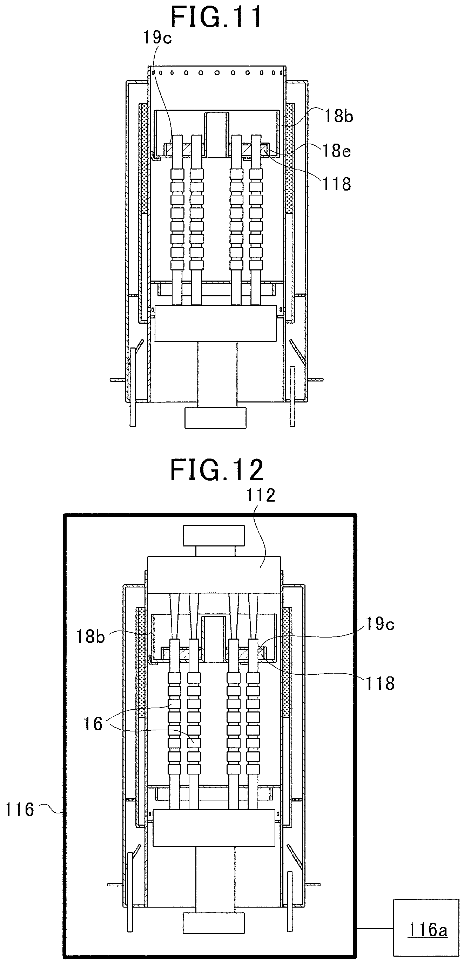

0106 As shown in Fig. 11, a predetermined amount of ceramic adhesive is injected, and after ceramic adhesive layer 118 spreads out uniformly on the inside of adhesive filling frame 18e on top of collection chamber lower member 18b, the upper fixture 112 is removed. In this state, cover member 19c is disposed on top of injected ceramic adhesive layer 118 (Fig. 24, step S5).

0107 As shown in Fig. 12, after cover member 19c is placed, upper fixture 112 is once again attached, and the apparatus placed in this state into drying oven 116; ceramic adhesive layer 118 is hardened and the outer circumferential surface of each fuel cell 16 is affixed to collection chamber lower member 18b (Fig. 24, step S6). Therefore drying oven 116 functions as an adhesive hardening apparatus. Thus the cell joining portion between fuel cells 16, which are constituent parts of the flow path which guides fuel, and collection chamber lower member 18b, is joined in an airtight manner by ceramic adhesive layer 118.

0108 Next we explain the dry hardening step for dry hardening ceramic adhesive. The dry hardening step has a workable hardening step for hardening the ceramic adhesive to a state in which the next manufacturing step can be executed, and a solvent elimination step for hardening the ceramic adhesive to a state in which it can withstand the temperature rise in start up step of solid oxide fuel cell system 1. Below we explain the workable hardening step.

In the embodiment, ceramic adhesives containing aluminum oxide, quartz, alkali metal silicates, silicon dioxide, and water are used as ceramic adhesive in the embodiment, and these ceramic adhesives are hardened by a dehydration condensation reaction. I.e., ceramic adhesives are hardened by the evaporation of included water, and of moisture produced by the condensation reaction. Therefore an extremely long time period is required to dry and harden ceramic adhesives at room temperature, so it is common in industry to harden using a drying oven or the like. However, because moisture is evaporated and volume shrinks when ceramic adhesive is hardened, cracks form in the ceramic adhesive layer with normal drying and hardening.

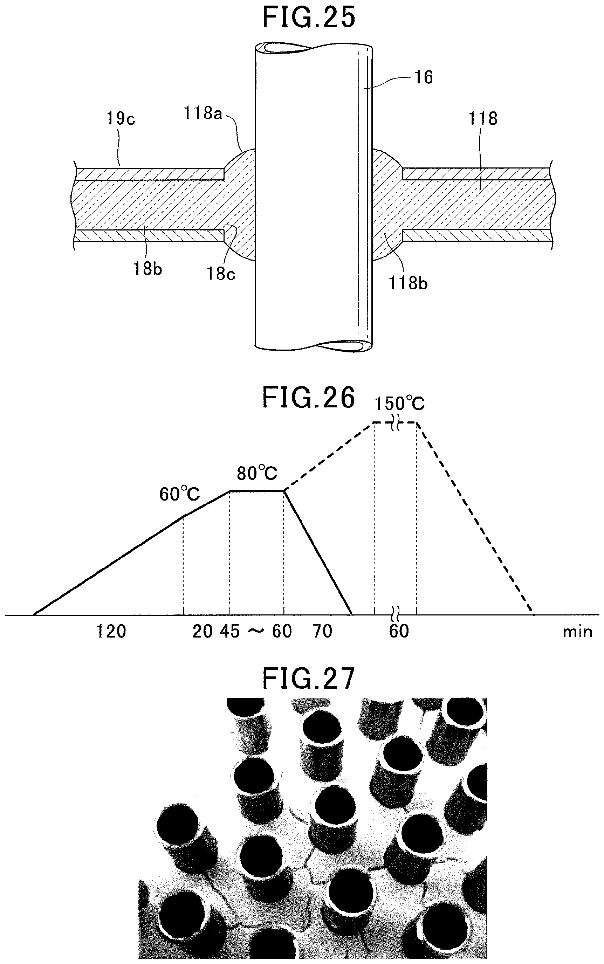

0109 Fig. 27 is a photograph showing an example of when an fuel cell is adhered by the normal adhesion method using ceramic adhesive. As shown in Fig. 27, a large number of cracks has occurred in the hardened ceramic adhesive layer. Cracks are thought to occur on the surface of the earlier hardening adhesive layer at the time of hardening, when moisture in the surface of the adhesive layer evaporates earlier and the adhesive hardens, so that internal moisture evaporates later. Even in such a state, the fuel cells are adhered with sufficient strength, but partial gaps form between the fuel cells and the ceramic adhesive so that sufficient airtightness cannot be secured. I.e., when ceramic adhesive is used with conventional methods, it is difficult to obtain adhesion and airtightness simultaneously, and this is believed to be the reason that they have still not reached a practical stage, notwithstanding multiple literature references proposing the use of ceramic adhesives in the technical field of solid oxide fuel cells.

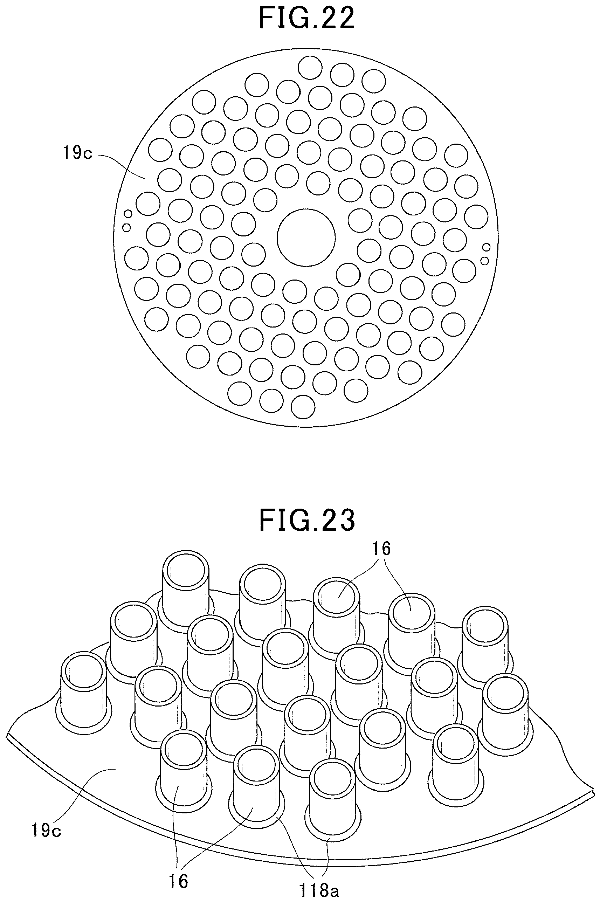

0110 Fig. 22 is plan view of cover member 19c disposed on injected ceramic adhesive in the embodiment.

Cover member 19c is a circular metal plate; a large circular opening for inserting the cylindrical portion of collection chamber lower member 18b is formed at the middle thereof, and multiple insertion holes for inserting each of the fuel cells 16 are formed in the periphery thereof. In the embodiment, the position and size of the insertion holes is constituted to be the same as that of insertion holes 18c in collection chamber lower member 18b.

0111 Fig. 23 is a perspective view showing cover member 19c disposed on the injected ceramic adhesive.

As shown in Fig. 23, when cover member 19c is disposed on be injected ceramic adhesive, ceramic adhesive underneath cover member 19c is pushed out by the weight of cover member 19c. The pushed out ceramic adhesive is filled into the gap between the insertion holes in cover member 19c and the outer circumferential surface of fuel cells 16, and protrudes on the perimeter of the fuel cells 16. As an variant example, a perimeter wall can be formed to surround the insertion holes on the edges of each insertion hole in cover member 19c. Thus even if a large amount of ceramic adhesive is pushed out around each of the fuel cells 16, the flow of adhesive onto cover member 19c can be suppressed.

0112 Note that each of fuel cells 16 is adhered with ceramic adhesive to the lead film layer 104a, 104b parts thereof (Fig. 6). Lead film layers 104a, 104b are dense layers, the same as solid electrolyte layer 100, therefore ceramic adhesive does not invade porous layers in porous support body 97 or the like, and air permeability of the porous support body 97 is not compromised.

0113 Fig. 25 is a cross section showing an expanded view of the adhering portion of fuel cells 16 to collection chamber lower member 18b.

As shown in Fig. 25, fuel cells 16 are inserted into the insertion holes 18c in collection chamber lower member 18b, and ceramic adhesive is injected onto collection chamber lower member 18b. Cover member 19c is disposed on the injected ceramic adhesive. Insertion holes are also formed in cover member 19c at the same positions as collection chamber lower member 18b, and fuel cells 16 penetrate these insertion holes and extend. Since a predetermined gap is present between the insertion holes in cover member 19c and the outer circumferential surface of fuel cells 16, cover member 19c is mounted on top of the ceramic adhesive so that the surface region of the joined fuel cells 16 is exposed. Thus ceramic adhesive layer 118 is formed between collection chamber lower member 18b and cover member 19c. A part of the ceramic adhesive is pressed out from beneath cover member 19c in the surface vicinity of fuel cells 16; the amount of ceramic adhesive in this vicinity increases and a prominence 118a is formed on the periphery of fuel cells 16. Also, pressed out ceramic adhesive forms a hanging portion 118b between insertion holes 18c and fuel cells 16, but due to viscosity, the ceramic adhesive does not flow downward. The assembly on which cover member 19c is disposed is placed in this state into drying oven 116 (Fig. 12).

0114 Fig. 26 is a graph of an example of the temperature control inside drying oven 116.

In the workable hardening step shown in Fig. 12, the control shown by the solid line in Fig 26 is imposed by heating controller 116a. First, after placing the assembly in drying oven 116, the temperature inside the drying oven 116 is raised from room temperature to approximately 60°C in approximately 120 minutes. Next, the temperature in drying oven 116 is raised to approximately 80°C in approximately 20 minutes, and thereafter maintained at approximately 80°C for approximately 60 minutes. After maintain the temperature at approximately 80°C, the temperature in the drying oven 116 is returned to room temperature in approximately 30 minutes.

0115 Thus by gradually raising the temperature, moisture in the ceramic adhesive layer 118 vaporizes slowly. However, because ceramic adhesive layer 118 is covered by cover member 19c, moisture does not directly vaporize from the part covered by cover member 19c. Therefore moisture in ceramic adhesive layer 118 is vaporized slowly through prominence 118a or hanging portion 118b on the periphery of fuel cells 16. Because of this concentration of moisture in prominence 118a and hanging portion 118b, which are exposed to outside air, it is difficult for these parts to dry. Since cover member 19c and collection chamber lower member 18b are made of metal with a high coefficient of thermal conductivity, heating of ceramic adhesive layer 118 is averaged even in cases where there is localized heating due to temperature unevenness, etc. within drying oven 116. This enables the suppression of cracks caused by sudden localized drying of the ceramic adhesive layer 118. On the other hand, because each of the fuel cells 16 is made of ceramic with a low coefficient of thermal conductivity, it is difficult for heat to transfer to the prominence 118a and hanging portion 118b around the fuel cells 16, and the drying and hardening of these parts is thus more gradual than other parts.

0116 Thus in the embodiment, because drying of the prominence 118a and hanging portion 118b on each of the fuel cells 16 is gradual, what is important for securing airtightness is to prevent cracking in the periphery of each of the fuel cells 16. Vaporization of moisture from the ceramic adhesive also results in reduction in the volume of the ceramic adhesive layer 118, producing "shrinkage." However in the peripheral part of each of the fuel cells 16, because of the formation of prominence 118a and hanging portion 118b, the ceramic adhesive layer is thicker than in other parts, therefore gaps between fuel cells 16 and the ceramic adhesive layer caused by the occurrence of shrinkage can be prevented. Thus airtightness can be secured in the adhered portion between each of the fuel cells 16 and each of the insertion holes 18c. Cover member 19c, which is disposed to cover the parts filled with ceramic adhesive, suppresses the occurrence of cracks when the ceramic adhesive hardens.

0117 Because of the formation of prominence 118a and hanging portion 118b, there is little through-puncturing of the ceramic adhesive by cracks even if a few cracks do occur in these parts, so airtightness can be reliably secured. Therefore prominence 118a and hanging portion 118b function as gas leak prevention portions for suppressing the occurrence of cracks caused by shrinkage when the ceramic adhesive hardens. Note that hardened ceramic adhesive is porous, and although airtightness relative to hydrogen or air is not total, a ceramic adhesive filled and hardened without gaps provides sufficient airtightness for practical use. In this Specification, the term "securing airtightness" means there are no leaks of moisture or air at a practical level.

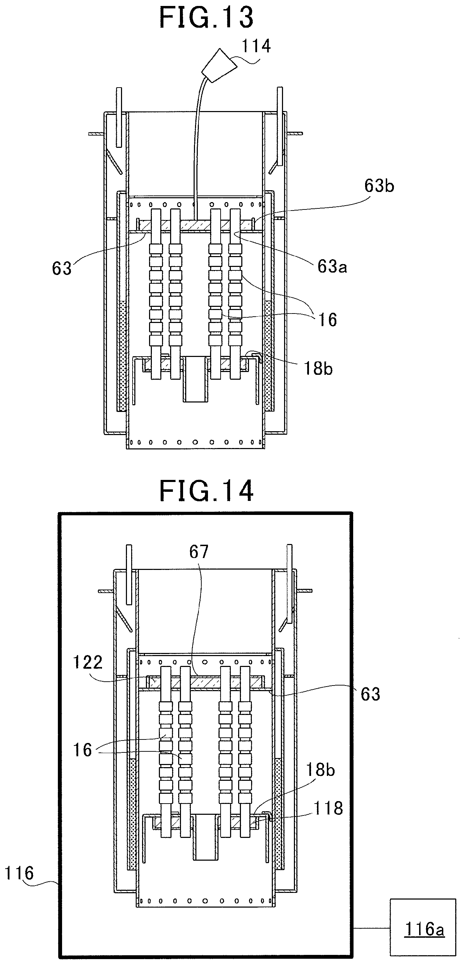

0118 In the workable hardening step shown in Fig. 12, the ceramic adhesive is hardened to a state in which the manufacturing steps subsequent to step S7 in Fig. 7 can be practiced. In this state, adhesion strength from the ceramic adhesive is sufficiently high, and in the use of common ceramic adhesives, this state can be viewed as the completion of the adhesion step. However, when ceramic adhesive is use in the assembly of solid oxide fuel cell system 1, this state is insufficient, and if solid oxide fuel cell system 1 is operated in this state, residual moisture inside solid oxide fuel cell system 1 will suddenly vaporize, causing large cracks in the ceramic adhesive. In this embodiment, for this state, the manufacturing steps in Fig. 13 and below are implemented.

0119 Next, after performing the workable hardening step, lower fixture 110 and upper fixture 112 are removed. Furthermore, as shown in Fig. 13, the top and bottom of the assembly are inverted, and ceramic adhesive is injected into the top of first affixing member 63 (the bottom surface when top and bottom are uninverted), from which the tip portions of each of the fuel cells 16 are protruding (Fig. 24, step S7). The outer circumferential surfaces of each of the fuel cells 16 with circular cross sections are affixed by ceramic adhesive to the edge portions of each of the round insertion holes 63a disposed on first affixing member 63. Here, adhesive filling frame 63b, extending in a circular shape to surround all of the insertion holes 63a, is disposed on first affixing member 63 (Fig. 3). For the adhesive application step, ceramic adhesive is injected by adhesive injection apparatus 114 into the interior of adhesive filling frame 63b, which surrounds each of the insertion holes 63a. Note that adhesion of each of the fuel cells 16 to first affixing member 63 in this step is the same as the above-described adhesion to collection chamber lower member 18b. Also, in this step each of the fuel cells 16 is affixed to collection chamber lower member 18b, therefore each of the fuel cells 16 can be held in the appropriate position without using upper fixture 112.

0120 Furthermore, as shown in Fig. 14, cover member 67 is disposed on the injected ceramic adhesive, and a ceramic adhesive layer 122 is formed between first affixing member 63 and cover member 67 (Fig. 24, step S8). Except for the formation of a circular opening at the center, cover member 67 is constituted in the same way as cover member 19c (Fig. 22), suppressing cracking during ceramic adhesive hardening. By placement of this cover member 67, a prominence and a hanging portion similar to Fig. 25 are formed on the periphery of each of the fuel cells 16, and the peripheral part of ceramic adhesive layer 122 on each of the fuel cells 16 serves to suppress gas leakage.

0121 In this state, assembly is placed in drying oven 116, and the second workable hardening step is implemented. In this workable hardening step, as well, the temperature inside drying oven 116 is controlled as shown by the solid line in Fig 26. Note that in the embodiment, in the second workable hardening step the time during which the temperature inside drying oven 116 is maintained at 80°C is set to approximately 50 minutes. In the second workable hardening step, ceramic adhesive layer 122 on first affixing member 63 is hardened, and each of the fuel cells 16 is affixed to first affixing member 63. Thus the cell joining portion between fuel cells 16, which are constituent parts of the flow path which guides fuel, and first affixing member 63, is joined in an airtight manner by ceramic adhesive layer 118. The operation of cover member 67 on this occasion is the same as in the first workable hardening step. Ceramic adhesive layer 118 is placed in a more stable state by the implementation of the second workable hardening step to ceramic adhesive layer 118 on collection chamber lower member 18b.

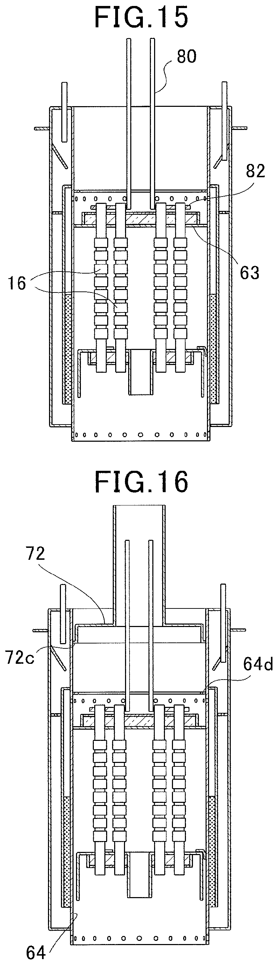

0122 Next, as shown in Fig. 15, power collector 82 is attached to the tip portions (the bottom portion when top and bottom are not inverted) of each of the fuel cells 16 protruding from first affixing member 63, and this power collector 82 is connected to bus bars 80 (Fig. 24, step S9).

0123 Furthermore, as shown in Fig. 16, dispersion chamber bottom member 72 is inserted from the opening at the bottom of inside cylindrical member 64 (at the top of Fig. 16). This dispersion chamber bottom member 72 is inserted up to the position at which the flange portion 72c on the outer circumference thereof makes contact with the ring shaped shelf member 64d welded onto the inside wall surface of inside cylindrical member 64, and will be registered at that position (Fig. 24, step S10).

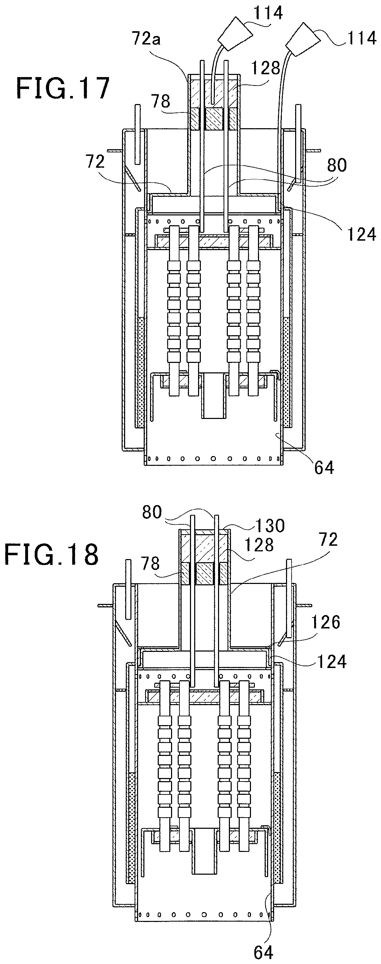

0124 Next, as shown in Fig. 17, ceramic adhesive is filled by adhesive injection apparatus 114 into the circular gap between the outer circumferential surface of dispersion chamber bottom member 72 and the inner circumferential surface of inside cylindrical member 64. Also, insulator 78 is disposed in the middle of the insertion pipe 72a provided at the center of dispersion chamber bottom member 72, and each of the bus bars 80 extending from power collector 82 penetrate this insulator 78. In addition, as an adhesive application step, ceramic adhesive is filled by adhesive injection apparatus 114 into the insertion pipe 72a on which insulator 78 is disposed. Each of the bus bars 80 extends through insertion pipe 72a to the outside, and ceramic adhesive is filled into the space surrounding each of the bus bars 80 inside insertion pipe 72a (Fig. 24, step S11).

0125 In addition, a dispersion chamber seal 126, being a circular thin plate on the ceramic adhesive layer 124 filled into the circular gap between the outer circumferential surface of dispersion chamber bottom member 72 and the inner circumferential surface of inside cylindrical member 64, is disposed as shown in Fig. 18. Also, a center seal plate 130 is disposed on the ceramic adhesive layer 128 filled into the interior of insertion pipe 72a (Fig. 24, step S12). A center seal plate 130 penetrates the holes formed on each bus bar 80. These dispersion chamber seals 126 and center seal plates 130 function as cover members for controlling the occurrence of cracks when the ceramic adhesive is hardening. In the state, the assembly is placed into drying oven 116 (not shown in Fig. 18), and a third workable hardening step is implemented (Fig. 24, step S13). In this workable hardening step, as well, the temperature inside drying oven 116 is controlled as shown by the solid line in Fig 26. Note that in the embodiment, in the third workable hardening step the time during which the temperature inside drying oven 116 is maintained at 80°C is set to approximately 45 minutes. In the second workable hardening step, ceramic adhesive layer 124 is hardened, and dispersion chamber bottom member 72 and inside cylindrical member 64 are adhered and affixed. Thus the joint portion between dispersion chamber bottom member 72, which is a constituent part of the flow path guiding fuel, and inside cylindrical member 64, is joined in an airtight manner by ceramic adhesive. In addition, ceramic adhesive layer 128 is also hardened, and insertion pipe 72a through which each of the bus bars 80 penetrate is closed off in an airtight manner.

0126 When these ceramic adhesives are dried, dispersion chamber seal 126 and center seal plate 130 prevent the sudden drying out of the surfaces of each of the adhesive layers, thereby suppressing the occurrence of cracks in ceramic adhesive layers 124 and 128. Also, ceramic adhesive layer 124, which is filled into the gap between inside cylindrical member 64 and dispersion chamber bottom member 72, is heated and hardened uniformly because of its circular shape, and the occurrence of cracking is thereby suppressed. For example, if the ceramic adhesive layer is formed in a rectangular shape, the speed of hardening differs between the corner portions and other parts, therefore the parts which dry and harden first are stretched by shrinkage of the ceramic adhesive and therefore tend to crack more easily. Stress is also more easily concentrated at the corner portions due to shrinkage of the ceramic adhesive such that cracks can easily occur. By contrast, because ceramic adhesive layer 124 in the embodiment is circular in shape, stress caused by shrinkage of the adhesive is not concentrated as drying and hardening proceed, therefore the occurrence of cracking associated with hardening of the ceramic adhesive can be suppressed. As a variant example, ceramic adhesive layer 124 can be constituted in an oval shape.

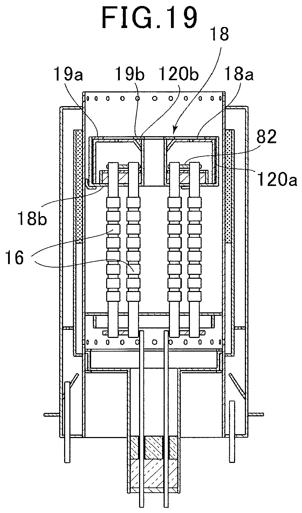

0127 After completion of the third workable hardening step, the top and bottom of the assembly are inverted, and as shown in Fig. 19, power collector 82 is attached to the tip portion of each of the fuel cells 16, which are affixed in such a way as to protrude from collection chamber lower member 18b (Fig. 24, step S14). The tip portions of each of the fuel cells 16 are thus electrically connected by this power collector 82. Furthermore, collection chamber upper member 18a is disposed on the opening portion at the top of collection chamber lower member 18b. There is a cylindrical (circular) gap (Fig. 4) between the outer circumferential surface of the disposed collection chamber upper member 18a and the inner circumferential surface of the outer perimeter wall of collection chamber lower member 18b. Next, an adhesive application step is implemented to fill this gap with ceramic adhesive layer 120a using adhesive injection apparatus 114 (not shown in Fig. 19). A circular large diameter seal 19a is disposed so as to cover the filled-in adhesive on top of ceramic adhesive layer 120a. There is also a circular gap between the outer circumferential surface of collection chamber lower member 18b and the opening portion at the center of collection chamber upper member 18a, and this gap is also filled with ceramic adhesive layer 120b using adhesive injection apparatus 114 (not shown in Fig. 19). A circular small diameter seal 19b is disposed to cover the filled-in adhesive on top of ceramic adhesive layer 120b. This large diameter seal 19a and small diameter seal 19b function as cover members for controlling the occurrence of cracks when the ceramic adhesive is hardening.

0128 Note that as a variant example, the invention can be constituted in such a way that the members are formed so the gap between collection chamber upper member 18a and collection chamber lower member 18b is oval in shape, and exhaust collection chamber 18 is formed by filling this gap with ceramic adhesive. Note that as a variant example, the invention can be constituted in such a way that the members are formed so the gap between the cylindrical portion of collection chamber lower member 18b and the opening portion of collection chamber upper member 18a is oval in shape, and exhaust collection chamber 18 is formed by filling this gap with ceramic adhesive.

0129 In the state, the assembly is again placed into drying oven 116 (not shown in Fig. 19), and a third workable hardening step is implemented (Fig. 24, step S15). In this workable hardening step, as well, the temperature inside drying oven 116 is controlled as shown by the solid line in Fig. 26. Note that in the embodiment, in the fourth workable hardening step the time during which the temperature inside drying oven 116 is maintained at 80°C is set to approximately 45 minutes. Ceramic adhesive layer 120a in the perimeter portion of exhaust collection chamber 18 and ceramic adhesive layer 120b in the center portion of exhaust collection chamber 18 are hardened by the fourth workable hardening step. At this time, large diameter seal 19a disposed on ceramic adhesive layer 120a and small diameter seal 19b disposed on ceramic adhesive layer 120b prevent sudden vaporization of moisture in each of the ceramic adhesive surfaces in the workable hardening step. The occurrence of cracks in ceramic adhesive layers 120a and 120b can thus be suppressed, and the airtightness of joint portions secured. Thus the joining portion between collection chamber upper member 18a, which is a constituent part of the flow path which guides fuel, and collection chamber lower member 18b, is joined in an airtight manner by ceramic adhesive. Note that each of the ceramic adhesive layers, hardened by what is now three iterations of the workable hardening step, is again gradually heated in a fourth workable hardening step, so remaining moisture is vaporized while avoiding the risk of cracking, and a more stable state is obtained.

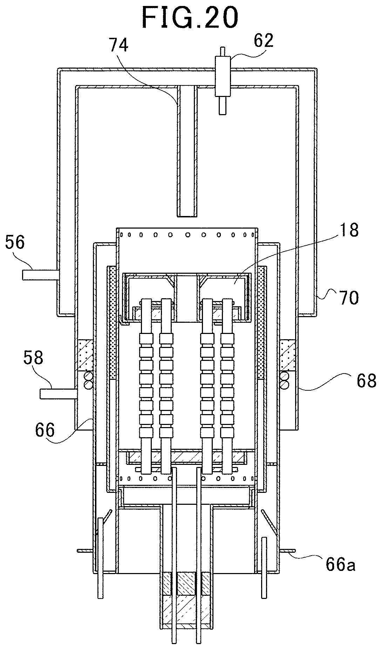

0130 Next, as shown in Fig. 20, inside cylindrical container 68 and external cylindrical container 70, which is a supply path constituent part, are placed onto the top of the assembly assembled up to the state shown in Fig. 19 (Fig. 24, step S16). Inside cylindrical container 68 and external cylindrical container 70 are attached to the assembly in a state whereby they are joined by welding. Also, exhaust gas exhaust pipe 58 is attached to the outside wall surface lower portion of inside cylindrical container 68, and oxidant gas jetting pipe 74 is attached to the inside ceiling thereof. Oxidant gas introducing pipe 56 is attached to the outside wall surface lower portion of external cylindrical container 70. Also, ignition heater 62 is attached so as to penetrate inside cylindrical container 68 and external cylindrical container 70. By placing inside cylindrical container 68 over the assembly, an exhaust gas discharge flow path 21 (Fig. 2) is formed between the outer circumferential surface of external cylindrical member 66 and the inner circumferential surface of inside cylindrical container 68. Also, oxidant gas jetting pipe 74 attached to inside cylindrical container 68 penetrates the opening portion at the center of the exhaust collection chamber 18 on the assembly.

0131 Note that as a variant example, the invention can be constituted so that inside cylindrical container 68 and external cylindrical container 70 are adhered using ceramic adhesive. In this case, ceramic adhesive is filled into the circular gap between inside cylindrical container 68 and external cylindrical container 70, affixing these members in an airtight manner. Alternatively, the invention can be constituted in such a way that these members are configured so the gap between the inside cylindrical container and the outside cylindrical container has an oval shape, and ceramic adhesive is filled into this oval shaped gap to affix these members in an airtight manner.

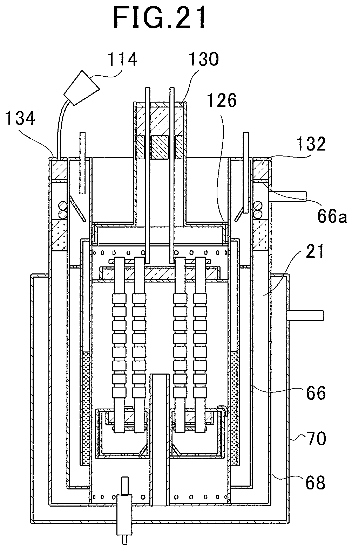

0132 As shown in Fig. 21, the top and bottom of the assembly onto which inside cylindrical container 68 and external cylindrical container 70 are placed are again inverted. Here, circular shelf member 66a is welded to the outside wall surface lower portion of external cylindrical member 66 (the top portion in Fig. 21); this shelf member 66a closes the gap between the outer circumferential surface of external cylindrical member 66 and the inner circumferential surface of inside cylindrical container 68. This circular space, surrounded by the outer circumferential surface of external cylindrical member 66, the inner circumferential surface of inside cylindrical container 68, and shelf member 66a, is filled with ceramic adhesive by the adhesive injection apparatus 114 as an adhesive application step (Fig. 24, step S17). Note that as a variant example, an outside cylindrical member and inside cylindrical container may be constituted so the gap between the outside cylindrical member and inside cylindrical container filled with ceramic adhesive is oval in shape.

0133 A circular exhaust passage seal 134 is disposed to cover filled-in ceramic adhesive layer 132. This exhaust passage seal 134 functions as a cover member for suppressing the occurrence of cracks when the ceramic adhesive hardens. In the state, the assembly is placed into drying oven 116 (not shown in Fig. 21), and a fifth workable hardening step is implemented (Fig. 24, step S18).

0134 In this workable hardening step, as shown in Fig. 26, the temperature inside drying oven 116 is first raised from room temperature to approximately 60°C in a approximately 120 minutes by heating controller 116a, then raised to approximately 80°C in approximately 20 minutes and maintained thereafter for approximately 60 minutes at approximately 80°C. After maintaining the temperature at approximately 80°C, the temperature inside drying oven 116 is raised to approximately 150°C in approximately 70 minutes as shown by the dotted line in Fig. 26, as solvent elimination and hardening step. In addition, after the temperature is maintained at approximately 150°C for approximately 60 minutes, it is then returned to room temperature in approximately 60 minutes.

0135 I.e., by implementing a fifth workable hardening step, the newly filled ceramic adhesive layer 132 is heated and hardened, and external cylindrical member 66 and inside cylindrical container 68 are adhered in an airtight manner. Thus the joint portion between external cylindrical member 66, which is a constituent part of the flow path guiding oxidant gas, and inside cylindrical container 68, is joined in an airtight manner by ceramic adhesive. At this time, the operation of exhaust passage seal 134 and the effect from the circular ceramic adhesive layer 132 are the same as for the above-described dispersion chamber seal 126 and ceramic adhesive layer 124. Also, the ceramic adhesive layers hardened in first through fourth workable hardening steps have respectively been subjected to multiple workable hardening steps, therefore gradual drying has been repeatedly applied, and a stable state of the ceramic adhesive layers is obtained while avoiding the risk of cracking.

0136 In particular, the workable hardening steps applied to the cell joining portion between each of the fuel cells 16 and collection chamber lower member 18b is executed in the first of the five implemented workable hardening steps. Also, after the last implemented workable hardening step applied to the cell joining portion, i.e., the workable hardening step applied to the joint portion between each of the fuel cells 16 and first affixing member 63 (the second workable hardening step), three iterations of workable hardening steps are implemented on constituent parts other than the fuel cells 16. Therefore four or more workable hardening steps are implemented on each of the cell joint portions, and an extremely stable state is obtained for the ceramic adhesive layers in each of the cell joint portions. A major problem results if airtightness is compromised in the cell joint portions, but airtightness can be reliably secured by repeatedly applying these workable hardening steps.

0137 The workable hardening steps applied between external cylindrical member 66 and inside cylindrical container 68 after the workable hardening steps applied to the cell joint portion have the purpose of securing airtightness in the exhaust gas discharge flow path 21 which conducts exhaust; even if by some chance airtightness is compromised here, the resulting negative effects would be less than when airtightness is compromised at the joint portion. In addition, as shown in the variant example described above, when inside cylindrical container 68 and external cylindrical container 70 are joined by ceramic adhesive, the workable hardening step applied to this joint portion is implemented after the workable hardening step applied to the cell joint portion. The joint portion between inside cylindrical container 68 and external cylindrical container 70 has the purpose of securing the airtightness of oxidant gas supply flow path 22, and even if by some chance airtightness is compromised here, the resulting negative effects would be less than when airtightness is compromised at the cell joint portion.

0138 Continuing after implementing the fifth workable hardening step, which is the last workable hardening step, a solvent elimination and hardening step is implemented (Fig. 24, step S19). Thus the solvent elimination and hardening step is carried out after the adhesive application step and the workable hardening step are repeated several times. In the solvent elimination hardening step, a dehydration condensation reaction is carried out in the workable hardening step, residual moisture is further vaporized from the fully hardened ceramic adhesive layers, and drying is applied until a state is reached at which the assembly can withstand the temperature rise in the solid oxide fuel cell system 1 startup step. In the embodiment, the solvent elimination and hardening step is implemented by maintaining a temperature inside the drying oven 116 of approximately 150°C for approximately 180 minutes. By implementing the solvent elimination and hardening step at a temperature higher than the workable hardening step, the ceramic adhesive layer can be dried in a short period of time to a state capable of withstanding the temperature rise in the start up state.

0139 It is thus desirable to execute the solvent elimination and hardening step at a temperature higher than the workable hardening step and lower then during the electrical generation operation by solid oxide fuel cell system 1. The ceramic adhesive used in the embodiment can be dried at a temperature of 200°C or below to a state capable of withstanding the temperature rise at the start up step, and the solvent elimination and hardening step is preferably executed at a temperature equal to or greater than 100°C and less than or equal to 200°C. The ceramic adhesive used in the embodiment can be dried at a temperature of 200°C or below to a state capable of withstanding the temperature rise at the start up step, and the solvent elimination and hardening step is preferably executed at a temperature equal to or greater than 100°C and less than or equal to 200°C.

0140 Ceramic adhesive filled in during the adhesive application step then passes through at least one workable hardening step, therefore even if the temperature of the drying oven 116 is raised to approximately 150°C in the solvent elimination and hardening step, no large cracks will occur in the ceramic adhesive layer. Note that even after completion of the solvent elimination and hardening step, there is moisture remaining in each of the ceramic adhesive layers, but since this is a minute amount, problems such as cracking do not occur even if the temperature inside fuel cell module 2 climbs to the electrical generation temperature level. Also, in the embodiment the solvent elimination and hardening step is carried out only once after multiple repetitions of the adhesive application step and the workable hardening step, and then a final workable hardening step, are executed, but it is also possible to implement the solvent elimination and hardening step multiple times during the manufacturing process.

0141 As a variant example, a solvent elimination and hardening step can also be added between the workable hardening step S1 and step S16 in Fig. 25. In this variant example, the added solvent elimination and hardening step is carried out by dividing into two iterations: a first solvent elimination and hardening step, and a second solvent elimination and hardening step.

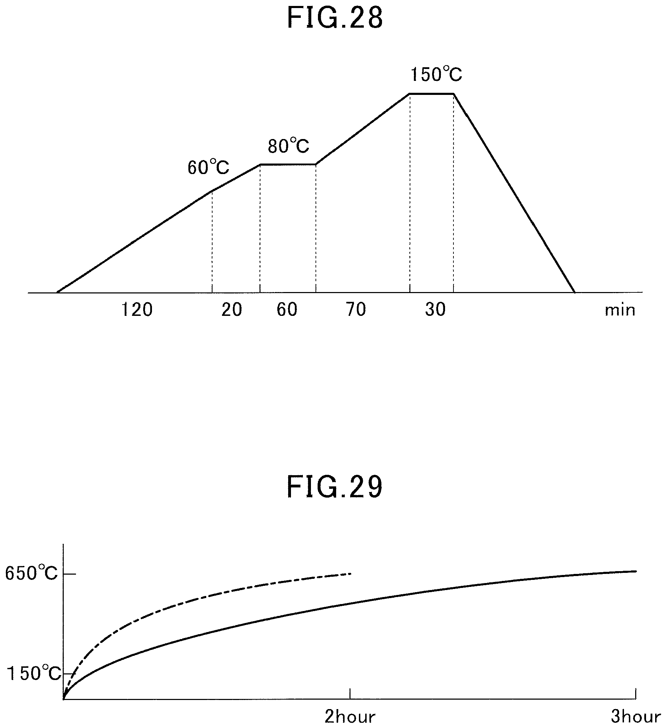

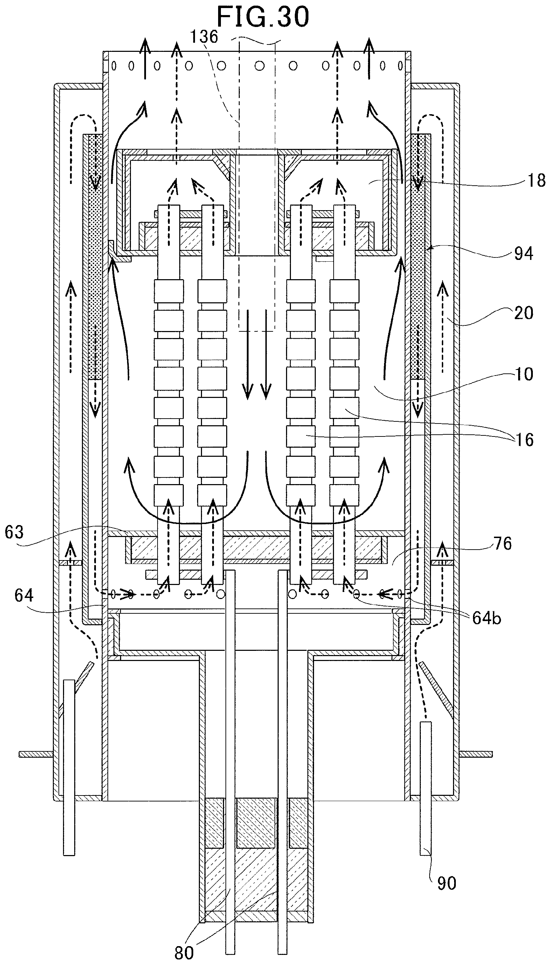

Figs. 28 through 30 are diagrams explaining the solvent elimination and hardening step according to this variant example. Fig. 28 is a diagram showing a first solvent elimination and hardening step, and Fig. 29 is a diagram showing a second solvent elimination and hardening step in this variant example. Fig. 30 is a diagram explaining the method of heating in a second solvent elimination and hardening step.

0142 First, when implementing the manufacturing method of this variant example, the heating in the first half of Fig. 28 is carried out as the fourth workable hardening step in Fig. 24, step S15. I.e., the assembly as assembled up through step S14 is placed into drying oven 116, and the temperature inside drying oven 116 is maintained at approximately 80°C for approximately 60 minutes. Next, as shown in Fig. 28, as a first solvent elimination and hardening step the temperature inside drying oven 116 is raised to approximately 150°C in approximately 70 minutes, and after this temperature is maintained for approximately 30 minutes, the temperature is reduced. In this first solvent elimination and hardening step the temperature is raised to approximately 150°C, but since each ceramic adhesive passes through at least one iteration of the solvent elimination and hardening step, no large cracks in the ceramic adhesive layers are produced by this heating.

0143 Next, the second solvent elimination and hardening step shown in Fig. 29 is implemented. In this second solvent elimination and hardening step, the temperature inside generating chamber 10 and of the fuel cells 16 rises to the temperature at the time of electrical generation operation, or close to that temperature. In the second solvent elimination and hardening step, heating of the assembly is not done inside the drying oven 116 but rather, as shown in Fig. 30, by feeding heated air into generating chamber 10 to heat the interior of generating chamber 10 and the fuel cells 16. I.e., in the second solvent elimination and hardening step, heated air introduction pipe 136 is inserted into generating chamber 10 through the opening portion at the center of exhaust collection chamber 18. In the second solvent elimination and hardening step, heated air is introduced into generating chamber 10 through heated air introduction pipe 136. The introduced air, as shown by the solid line arrow in Fig. 30, heats each of the fuel cells 16 in generating chamber 10, then passes through the gap between the outer circumference of exhaust collection chamber 18 and the inner circumferential wall of inside cylindrical member 64 and flows to the outside of the assembly. Each of the ceramic adhesive layers at the joint portion of the fuel cells 16 and the first affixing member 63, the joint portion of the collection chamber lower member 18b and the fuel cells 16, the joint portion of the collection chamber upper member 18a and the collection chamber lower member 18b, and the joint portion of the dispersion chamber bottom member 72 and the inside cylindrical member 64 are heated, and solvents remaining within the hardened ceramic adhesive is further vaporized.

0144 The temperature of air introduced into generating chamber 10 through heated air introduction pipe 136 is raised a little at a time over a long period of time up to the temperature at which solid oxide fuel cell system 1 can generate electricity. In this variant example, as shown by the solid line in Fig. 29, the temperature of heated air introduced from heated air introduction pipe 136 is raised to approximately 650°C over approximately 3 hours from the start of introduction. This temperature rise is made more gradual than the temperature rise in generating chamber 10 during the solid oxide fuel cell system 1 startup step shown by the single dot and dash line in Fig. 29. In the example shown in Fig. 29, the temperature inside generating chamber 10 is raised to approximately 650°C in approximately 2 hours, whereas in the second solvent elimination and hardening step, the temperature of the supplied air is raised to approximately 650°C in approximately 3 hours.

0145 By thus gradually raising the temperature, the solvent remaining in the ceramic adhesive layer is heated a little at a time and vaporized. The occurrence of excessive cracks due to sudden volumetric expansion and vaporization of the solvent is thus suppressed. Also, in the second solvent elimination and hardening step the temperature of each of the ceramic adhesive layers in the generating chamber 10 is raised up to the actual temperature during electrical generation operation. As a result, even if the temperature of a finished solid oxide fuel cell system 1 is suddenly raised during the startup step, the absence of excessive cracking in the ceramic adhesive layer can be more reliably assured.

0146 Also the second solvent elimination and hardening step, in which the temperature inside the generating chamber 10 is raised to approximately 650°C, can be implemented at the end of step S15 rather than at the end of the assembly process (after Fig. 24, step S18), thereby simplifying the assembly step. I.e., it is possible to pre-attach combustion catalyst 60, ignition heater 62, sheath heater 61, and devices such as sensors to the inside cylindrical container 68 and external cylindrical container 70 assembled in step S16, so that these devices can be assembled in a single pass at the same time that inside cylindrical container 68 and external cylindrical container 70 are being attached. However these devices cannot withstand a temperature of approximately 650°C (during actual electrical generation operation of solid oxide fuel cell system 1, the locations where these devices are attached do not rise to a temperature of approximately 650°C). Therefore if the second solvent elimination and hardening step is implemented after completion of the attachment of inside cylindrical container 68 and external cylindrical container 70 (after step S18 in Fig. 24), it becomes necessary to separately attach devices such as the ignition heater 62, etc. later on, thereby complicating the manufacturing process.

0147 On the other hand in the second solvent elimination and hardening step inert gas is introduced from fuel gas supply pipe 90 in parallel with the introduction of heated air from heated air introduction pipe 136. As indicated by the dotted arrow in Fig. 30, inert gas supplied from fuel gas supply pipe 90 rises to the top end within fuel gas supply flow path 20, then drops down through reforming section 94, passes through the small holes 64b formed in the lower portion of inside cylindrical member 64, and flows into fuel gas dispersion chamber 76. Inert gas which has flowed into fuel gas dispersion chamber 76 flows through the inside (the fuel electrode side) of each of the fuel cell units 16 attached to first affixing member 63 of fuel gas dispersion chamber 76 and into exhaust collection chamber 18. Inert gas which has flowed into exhaust collection chamber 18 is jetted out from jet openings 18d in exhaust collection chamber 18 and flows out to the outside of the assembly.

0148 In this variant example, nitrogen gas is used as the inert gas. The introduced nitrogen gas is heated so as to be able to heat the interior of each of the fuel cells 16. In this way, inert gas is introduced into each of the fuel cells 16, and the oxidant gas (air) in each of the fuel cells 16 and the reforming section 94 is thereby discharged. Oxidation of the fuel electrodes in each of the fuel cells 16 and oxidation of the reforming catalyst in reforming section 94 when the temperature is raised during the electrical generation operation can thus be prevented. Also, in the second solvent elimination and hardening step, hydrogen gas maybe supplied from the fuel gas supply pipe 90 instead of inert gas. In such cases, the hydrogen gas passes over the fuel electrode side in each of the fuel cells 16, which have been raised to a high-temperature, therefore the fuel electrodes can be reduced. Note that in the second solvent elimination and hardening step, inert gas is supplied until the temperature in each of the fuel cells 16 has risen sufficiently, and after the temperature has risen, inert gas is switched over to hydrogen gas.

0149 Note that in this variant example it is possible after the first solvent elimination and hardening step to raise the temperature up to the temperature of the second solvent elimination and hardening step without reducing the temperature. In this case as well it is necessary to supply inner gas from fuel gas supply pipe 90. Of the first and second solvent elimination and hardening steps, it is possible to eliminate the first solvent elimination and hardening step. In such cases, the rise in the temperature of supplied heated air is made even more gradual during the second solvent elimination and hardening step; it is desirable to raise the temperature over 4 or more hours.

0150 In a state in which oxidant gas is supplied to the air electrode side of each of the fuel cells 16, hydrogen gas is supplied to the fuel efficiency side, and the temperature of each of the fuel cells 16 is sufficiently raised, a voltage is generated between the two bus bars 80 connected to fuel cells 16. By measuring the voltage between these bus bars 80, a determination can be made as to the go/no go status of the joint portions of each of the fuel cells 16 and the assembly. The measurement of voltage is carried out with no current flowing between the bus bars 80. When there is a problem in the fuel cells 16 themselves, the voltage produced between bus bars 80 drops. Also, if a large fuel leak occurs at the joint portion between each of the fuel cells 16 and the first affixing member 63, or at the joint portion between each of the fuel cells 16 and the collection chamber lower member 18b, sufficient fuel gas is not supplied to the fuel electrode, so the voltage drops. Thus in the second solvent elimination and hardening step, reduction of the fuel electrodes on each of the fuel cells 16 and inspection of the semi-finished solid oxide fuel cell system 1 product can be accomplished simultaneously.

0151 It is also possible to change the time for the workable hardening step set in this embodiment. For example the time for the initially implemented workable hardening step could be made shorter than the time for subsequently performed workable hardening steps. The joint portion on which the workable hardening step is performed at the beginning is treated to a greater number of iterations of workable hardening steps than subsequently treated joint portions, therefore the risk of cracking can be sufficiently reduced while shortening the time required for the workable hardening step.

0152 After fuel cell housing container 8 is completed by the above-described manufacturing processes, various parts are attached to complete a solid oxide fuel cell system 1. The lower fixture 110 (first positioning apparatus), upper fixture 112 (second positioning apparatus), adhesive injection apparatus 114, drying oven 116 (adhesive hardening apparatus), and heating controller 116a constitute the manufacturing equipment for a solid oxide fuel apparatus used in the above-described manufacturing method for solid oxide fuel cell system 1.

0153 In the solid oxide fuel cell system 1 of the present embodiment of the invention, prominence 118a and hanging portion 118b, being gas leak suppression portions, are formed by ceramic adhesive layers around the periphery of each of the fuel cells 16 on the joint portions between each of the fuel cells 16 and collection chamber lower member 18b (Fig. 25). Similarly, prominences and hanging portions, being gas leak suppression portions, are also formed by ceramic adhesive layers on the joint portions between each of the fuel cells 16 and the first affixing member 63. By so doing, the occurrence of fuel depletion caused by fuel gas leaking from the joint portion between fuel cells 16 and first affixing member 63 or collection chamber lower member 18b, or problems such as anomalous combustion of fuel leaked to the air electrode side, can be prevented.

0154 Also, in the solid oxide fuel cell system 1 of the present embodiment, when adhering ceramic adhesive, a pool of the ceramic adhesive is formed in the surrounding part of fuel cells 16, and by hardening this pool, prominence 118a and hanging portion 118b are formed and the ceramic adhesive is made thicker (Fig. 25). By so doing, even if "shrinkage" occurs when the adhered ceramic adhesive is hardened, no gap is created between the hardened ceramic adhesive layer and the fuel cells 16, and airtightness can be assured at the joint portion. Even when cracks do form in the ceramic adhesion layer, the ceramic adhesive layer around the fuel cells 16 are formed thickly, so there is little penetration and extension through the ceramic adhesive layer by the cracks, and a more reliable airtightness can be secured.

0155 In addition, in solid oxide fuel cell system 1 of the present embodiment, hardening of the ceramic adhesive in the periphery portion of each of the fuel cells 16 is made gradual, so adhesive in prominence 118a and hanging portion 118b hardens later, reducing the likelihood of cracking in these parts and enabling the suppression of fuel gas leaks.

0156 Also, in solid oxide fuel cell system 1 of the present embodiment, the portion away from the surrounding part of each of the fuel cells 16 is covered by a cover member 19c, 67 (Fig. 22), therefore localized drying of the covered portion of the ceramic adhesive surface can be prevented and the occurrence of cracking suppressed. Since cover members 19c and 67 are metal plates, they have a high coefficient of thermal conductivity, therefore parts of the ceramic adhesive covered by the cover members are dried essentially uniformly, and the occurrence of cracking can be suppressed. On the other hand, ceramic adhesive on the surrounding portion of each of the fuel cells 16 not covered by a cover member is positioned close to the low-coefficient of thermal conductivity fuel cells 16, therefore drying is relatively gradual and the occurrence of cracking is suppressed.

0157 In addition, in the solid oxide fuel cell system 1 of the present embodiment, ceramic adhesive prior to hardening is covered by cover members 19c and 67, and prominence 118a and hanging portion 118b are formed by the pressing out of ceramic adhesive at the peripheral parts of each of the fuel cells 16. Ceramic adhesive pools can thus be formed on the surrounding portions of fuel cells 16 using a simple structure, thereby forming prominence 118a and hanging portion 118b.

0158 We have described above a preferred embodiment of the present invention, but various changes may be added to the above-described embodiments.

In particular, in the above-described embodiment the workable hardening step applied to each joint portion is applied to the joint portion between collection chamber lower member 18b and fuel cells 16, the joint portion between fuel cells 16 and first affixing member 63, the joint portion between collection chamber upper member 18a and collection chamber lower member 18b, the joint portion between dispersion chamber bottom member 72 and inside cylindrical member 64, and the joint portion between external cylindrical member 66 and inside cylindrical container 68, in that order, but as a variant example it is also possible to constitute the invention by joining fuel cells from the bottom end portion.

0159 In this case, the workable hardening step is applied to the joint portion between the fuel cells 16 and first affixing member 63 the first time, the joint portion between collection chamber lower member 18b and fuel cells 16 the second time, the joint portion between collection chamber upper member 18a and collection chamber lower member 18b the third time, the joint portion between dispersion chamber bottom member 72 and inside cylindrical member 64 the fourth time, and the joint portion between external cylindrical member 66 and inside cylindrical container 68 the fifth time. In this variant example, the workable hardening step applied to the joint portion joining fuel cells with other constituent parts is carried out during the first half of the five iterations of the workable hardening step, i.e., in the first and second iterations. Thus the largest number of workable hardening steps is performed on the cell joint portions which have particular need to secure airtightness, and airtightness can be secured in the cell joint portions.

### Explanation of Reference Numerals

0160
1: solid oxide fuel cell system
2: fuel cell module
4: auxiliary unit
7: thermal insulation
8: fuel cell housing container
10: electrical generating chamber
16: fuel cell
16a: single cell
18: exhaust collection chamber
18a: collection chamber upper member
18b: collection chamber lower member (second affixing member)
18c: insertion holes
18d: jet openings
18e: adhesive filling frame
19a: large diameter seal
19b: small diameter seal
19c: cover member
20: fuel gas supply flow path
21: exhaust gas discharge flow path
22: oxidant gas supply flow path
24: water supply source
26: pure water tank
28: water flow volume regulator unit (water supply apparatus)
30: fuel supply source
34: heat exchanger
35: electromagnetic valve
36: desulfurizer
38: fuel blower (fuel supply apparatus)
40: air supply source
45: generating air flow regulator unit 45 (oxidant gas supply apparatus)
50: hot water production device
54: inverter
56: oxidant gas introducing pipe (oxidant gas introduction opening)
58: exhaust gas exhaust pipe 58 (exhaust gas outflow opening)
60: combustion catalyst
61: sheath heater
62: ignition heater
63: first affixing member (dispersion chamber forming plate)
63a: insertion holes
63b: adhesive filling frame
64: inside cylindrical member (generating chamber constituent member)
64a: small holes
64b: small holes
64c: stays
64d: 64d shelf member
65: intermediate cylindrical member
66: external cylindrical member
66a: shelf member
67: cover member
68: inside cylindrical container (exhaust passage constituent member)
70: external cylindrical container (supply passage constituent member)
72: dispersion chamber bottom member
72a: insertion pipe (electrical conductor passage)
72b: thermal insulation
72c: flange portion
74: oxidant gas jetting pipe
76: fuel gas dispersion chamber
78: insulator
80: bus bars
82: power collector
86: vaporization section
86a: inclined plate
88: water supply pipe
90: fuel gas supply pipe
92: fuel gas supply flow path partition
92a: jet openings
94: reforming section
96: reforming catalyst
97: porous support body
98: fuel electrode
99: reaction suppression layer
100: solid electrolyte layer
101: air electrode
102: interconnector layer
103a: electrode layer
103b: electrode layer
104b: lead film layer 104
110: lower fixture (first positioning apparatus)
110a: positioning shaft
110b: base surface
112: upper fixture (second positioning apparatus)
112a: truncated cones
114: adhesive injection apparatus 114 (adhesive application apparatus)
116: drying oven (heating apparatus, adhesive hardening apparatus)
116a: heating controller
118: ceramic adhesive layer
118a: prominence
118b: hanging portion
120a: ceramic adhesive layer
120b: ceramic adhesive layer
122: ceramic adhesive layer
124: ceramic adhesive layer
126: dispersion chamber seal
128: ceramic adhesive layer
130: center seal plate
132: ceramic adhesive layer
134: exhaust passage seal
136: heated air introduction pipe

## Claims

1. A solid oxide fuel cell system (1) for generating electricity by reacting fuel and oxidant gas, comprising:
a fuel cell module (2) comprising plurality of fuel cells (16), and
a fuel gas dispersion chamber (76) that distributes and supplies fuel to each of the fuel cells (16),
and an affixing member (18b, 63) constituting a part of the fuel gas dispersion chamber (76), with multiple insertion holes (18c, 63a) formed in the affixing member into which the fuel cells are inserted,
wherein each of the fuel cells (16) is affixed in an airtight manner to the affixing member (18b, 63) using a ceramic adhesive by means of a layer of a ceramic adhesive formed on the affixing member (18b, 63), and the layer of the ceramic adhesive has a gas leak suppression portion around the periphery of each of the fuel cells (16) which is formed thicker than other parts of the layer of the ceramic adhesive and comprises a prominence (118a) and a hanging portion (118b), and wherein the gas leak suppression portion suppresses the occurrence of cracks in the layer of the ceramic adhesive caused by shrinkage when the ceramic adhesive is hardened.

2. The solid oxide fuel cell system (1) according to Claim 1, wherein a passage through which gas passes is formed inside each of the fuel cells (16), and an outer circumferential surface of the fuel cell (16) is affixed to the affixing member (18b, 63) via the gas leak suppression portion, so that when the ceramic adhesive is hardened, the hardening ceramic adhesive is more gradual in the surrounding part of each of the fuel cells (16) than in other parts, and cracking in the gas leakage suppression portion is suppressed.

3. The solid oxide fuel cell system (1) according to Claim 2, wherein each of the fuel cells (16) is cylindrical, and the gas leak suppression portion is formed on the outer surface of each of the fuel cells (16).

4. The solid oxide fuel cell system (1) according to Claim 2, further comprising a plate (67) covering the part of the ceramic adhesive away from the surrounding part of each of the fuel cells (16), wherein the plate (67) makes hardening of the ceramic adhesive in the gas leak suppression portion more gradual.

5. The solid oxide fuel cell system (1) according to Claim 4, wherein the plate (67) is formed of a material with a higher coefficient of thermal conductivity than the fuel cells.

6. The solid oxide fuel cell (1) system according to Claim 4, wherein the gas leak suppression portion is formed by mounting the plate (67) onto the ceramic adhesive adhered to the affixing member (63) when each of the fuel cells (16) is being adhered, so the ceramic adhesive prior to hardening is pressed into the surrounding part of each of the fuel cells (16).

7. The solid oxide fuel cell system (1) according to Claim 6, wherein the affixing member (18b, 63) and the plate (67) respectively have insertion holes (63a) at a predetermined spacing for the insertion of the fuel cells (16) and perimeter walls are formed to surround each of the insertion holes (63a) on the edge portions of each insertion hole (63a) of the affixing member (18b, 63) or the plate (67).

8. The solid oxide fuel cell (1) system according to Claim 1, wherein a plate (67) is disposed on the layer of the ceramic adhesive adhering to each of the fuel cells (16), thereby suppressing the occurrence of cracking during hardening of the ceramic adhesive.

9. The solid oxide fuel cell system (1) according to Claim 8, wherein the ceramic adhesive is hardened by a dehydration condensation reaction, and the plate (67) is mounted on the filled-in ceramic adhesive to cover the portions of the layer of the ceramic adhesive other than the gas leak suppression portion, and so as to expose the vicinity of a surrounding part of the fuel cells (16) being adhered, so that at the time of ceramic adhesive hardening, the ceramic adhesive prior to hardening is pressed out to the vicinity of the surfaces of the fuel cells (16) and the amount of ceramic adhesive increases close to the surface of the fuel cells (16) being adhered, so that the gas leak suppression portion is formed.

10. The solid oxide fuel cell system (1) according to Claim 8, wherein plurality of the fuel cells (16) are affixed by ceramic adhesive to the affixing member (18b, 63), and by injecting ceramic adhesive onto the affixing member (18b, 63) with the fuel cells (16) inserted into insertion holes (63a) formed in the affixing member (18b, 63), and gaps between the outer circumferential surface of the fuel cells (16) and the insertion holes (63a) are filled in by ceramic adhesive, and the fuel cells (16) are affixed to the affixing member (63a).

11. The solid oxide fuel cell system (1) according to Claim 10, wherein the plate (67) has plurality of insertion holes for the insertion of the fuel cells (16); the plate (67) is disposed on the ceramic adhesive which has been injected onto the affixing members (18b, 63), and a generally uniform gap is formed between the insertion holes in the plate (67) and the outer perimeter surface of the fuel cells (16).

12. The solid oxide fuel cell system (1) according to Claim 11, wherein at the time of hardening, the ceramic adhesive pressed out prior to hardening from beneath the plate (67) by the weight of the plate (67) is filled into the gap between each of the insertion holes in the plate (67) and the outer perimeter surface of the fuel cells (16).

13. The solid oxide fuel cell system (1) according to Claim 11, wherein perimeter walls are formed to surround the insertion holes (63a) on the edge portions of each insertion hole disposed on the plate (67).

## Patentansprüche

1. Festoxidbrennstoffzellsystem (1) zur Erzeugung von Efektrizität durch Reaktion zwischen Brennstoff und Oxidationsgas, umfassend:
ein Brennstoffzellmodul (2) umfassend eine Anzahl von Brennstoffzellen (16), und
eine Brennstoffgasdispersionskammer (76), welche Brennstoff an jede der Brennstoffzellen (16) verteilt und zuführt,
und ein Befestigungselement (18b, 63), welches einen Teil der Brennstoffgasdispersionskammer (76) bildet, mit mehreren Einsatzöffnungen (18c, 63a), welche in dem Befestigungselement ausgebildet sind und in welche die Brennstoffzellen eingesetzt werden,
wobei jede der Brennstoffzellen (16) luftdicht unter Verwendung eines keramischen Klebers durch eine Schicht des keramischen Klebers an dem Befestigungselement angebracht sind, welche auf dem Befestigungselement (18b, 63) ausgebildet ist, und wobei die keramische Klebelage einen Gasleckunterdrückungsabschnitt um die Peripherie jede der Brennstoffzellen (16) aufweist, welcher dicker ist als andere Teile der keramischen Klebeschicht und einen Vorsprung (118a) und einen hängenden Abschnitt (118b) umfasst, und wobei der Gasleckunterdrückungsabschnitt das Auftreten von Rissen in der keramischen Klebeschicht unterdrückt, welche durch Schrumpfung hervorgerufen werden, wenn der keramische Kleber ausgehärtet wird.

2. Festoxidbrennstoffzellsystem (1) nach Anspruch 1, wobei ein Durchgang, durch welchen Gas hindurchtritt, in jeder der Brennstoffzellen (16) ausgebildet ist, und wobei eine äußere umfängliche Oberfläche der Brennstoffzellen (16) an dem Befestigungselement (18b, 63) über den Gasleckunterdrückungsabschnitt befestigt ist, so dass, wenn der keramische Kleber ausgehärtet wird, der aushärtende keramische Kleber in dem umgebenden Abschnitt jeder der Brennstoffzellen (16) abgestufter ausgebildet ist als in anderen Teilen, und dass Brüche in dem Gasleckunterdrückungsabschnitt unterdrückt werden.

3. Festoxidbrennstoffzellsystem (1) nach Anspruch 2, wobei jede der Brennstoffzellen (16) zylindrisch ist und der Gasleckunterdrückungsabschnitt an einer äußeren Oberfläche jeder der Brennstoffzellen (16) ausgebildet ist.

4. Festoxidbrennstoffzellsystem (1) nach Anspruch 2, weiterhin umfassend eine Platte (67), welche den Teil des keramischen Klebers abdeckt, welcher von dem umgebenden Teil jeder der Brennstoffzellen (16) abgewandt ist, wobei die Platte (67) das Aushärten des keramischen Klebers in dem Gasleckunterdrückungsabschnitt abstuft.

5. Festoxidbrennstoffzellsystem (1) nach Anspruch 4, wobei die Platte (67) aus einem Material besteht, welches einen höheren thermischen Leitfähigkeitskoeffizienten aufweist als die Brennstoffzellen.

6. Festoxidbrennstoffzellsystem (1) nach Anspruch 4, wobei der Gasleckunterdrückungsabschnitt dadurch gebildet wird, dass die Platte (67) auf dem keramischen Kleber, welcher auf dem Befestigungselement (63) aufgebracht ist, angebracht wird, wenn jede der Brennstoffzellen (16) angeklebt wird, so dass der keramische Kleber vor dem Aushärten in den umgebenden Teil jeder der Brennstoffzellen (16) gedrückt wird.

7. Festoxidbrennstoffzellsystem (1) nach Anspruch 6, wobei das Befestigungselement (18b, 63) und die Platte (67) jeweils Einsatzöffnungen (63a) in vorbestimmten Abständen für das Einsetzen der Brennstoffzellen (16) haben und umfängliche Wände so ausgebildet sind, dass sie jede der Einsatzöffnungen (63a) in jedem Kantenbereich jeder Einsatzöffnung (63a) des Verbindungsgliedes (18b, 63) oder der Platte (67) umgeben.

8. Festoxidbrennstoffzellsystem (1) nach Anspruch 1, wobei eine Platte (67) auf der keramischen Klebelage angeordnet ist, welche an jeder der Brennstoffzellen (16) ausgebildet ist, wodurch das Auftreten von Rissen während des Aushärtens des keramischen Klebers unterdrückt wird.

9. Festoxidbrennstoffzellsystem (1) nach Anspruch 8, wobei der keramische Kleber durch eine Dehydrationskondensationsreaktion ausgehärtet wird, und die Platte (67) wird auf den Ausgefüllten keramischen Kleber montiert, um die Abschnitte der keramischen Klebelage abzudecken, welche nicht zu dem Gasieckunterdrückungsabschnitt gehören, und so, dass die Umgebung eines umgebenden Abschnittes der Brennstoffzellen (16), weicher angeklebt wird, freigelegt ist, so dass zum Zeitpunkt des Aushärtens des keramischen Klebers dieser vor dem Aushärten aus der Umgebung der Oberflächen der Brennstoffzellen (16) hinausgepresst wird und der Anteil von keramischen Kleber nahe an der Oberfläche der Brennstoffzellen (16), welche angeklebt werden, größer wird, so dass der Gasleckunterdrückungsabschnitt gebildet wird.

10. Festoxidbrennstoffzellsystem (1) nach Anspruch 8, wobei die Mehrzahl von Brennstoffzellen (16) durch keramischen Kleber an dem Verbindungselement (18b, 63) angebracht werden, und durch Einspritzen von keramischem Kleber in das Verbindungselement (18b, 63) mit den Brennstoffzellen (16), welche in die Einsatzöffnungen (63a) eingesetzt sind, welche in dem Verbindungselement (18b, 63) gebildet sind, und wobei Lücken zwischen der äußeren umfänglichen Oberfläche der Brennstoffzellen (16) und den Einsatzöffnungen (63a) mit dem keramischen Kleber gefüllt werden, und so die Brennstoffzellen (16) an dem Verbindungsglied (63a) befestigt werden.

11. Festoxidbrennstoffzellsystem (1) nach Anspruch 10, wobei die Platte (67) eine Mehrzahl von Einsatzöffnungen zum Einsetzen der Brennstoffzellen (16) aufweist; und wobei die Platte (67) auf dem keramischen Kleber angeordnet ist, welcher in das Verbindungsaglied (18b, 63) eingespritzt wurde, und wobei eine im Wesentlichen gleichförmige Lücke zwischen den Einsatzöffnungen in der Platte (67) und der äußeren umfänglichen Oberfläche der Brennstoffzellen (16) gebildet wird.

12. Festoxidbrennstoffzellsystem (1) nach Anspruch 11, wobei zum Zeitpunkt des Aushärtens der keramischen Klebers, welcher vor dem Aushärten unter der Platte (67) durch das Gewicht der Platte (67) hinausgepresst wurde, dieser in die Lücke zwischen jede der Einsatzöffnungen in der Platte (67) und der äußeren umfänglichen Oberfläche der Brennstoffzellen (16) eingebracht wird.

13. Festoxidbrennstoffzellsystem (1) nach Anspruch 11, wobei umfängliche Wände ausgebildet werden, um die Einsatzöffnungen (63a) an den Kantenabschnitten jeder Einsatzöffnung in der Platte (67) zu umgeben.

## Revendications

1. Système de pile à combustible à oxyde solide (1) destiné à générer de l'électricité en faisant réagir un combustible et un gaz comburant, comprenant :
un module de pile à combustible (2) comprenant une pluralité de piles à combustible (16), et
une chambre de dispersion de gaz combustible (76) qui distribue et fournit du combustible à chacune des piles à combustible (16),
et un organe d'apposition (18b, 63) constituant une partie de la chambre de dispersion de gaz combustible (76), avec de multiples trous d'insertion (18c, 63a) formés dans l'organe d'apposition dans lequel sont insérées les piles à combustible,
dans lequel chacune des piles à combustible (16) est apposée de manière étanche à l'air sur l'organe d'apposition (18b, 63) à l'aide d'un adhésif céramique au moyen d'une couche d'un adhésif céramique formé sur l'organe d'apposition (18b, 63), et la couche de l'adhésif céramique comporte une portion de suppression de fuite de gaz autour de la périphérie de chacune des piles à combustible (16) qui est formée plus épaisse que d'autres parties de la couche de l'adhésif céramique et comprend une proéminence (118a) et une portion de suspension (118b), et dans lequel la portion de suppression de fuite de gaz supprime l'occurrence de fissures dans la couche de l'adhésif céramique provoquées par un rétrécissement lorsque l'adhésif céramique est durci.

2. Système de pile à combustible à oxyde solide (1) selon la revendication 1, dans lequel un passage traversé par un gaz est formé à l'intérieur de chacune des piles à combustible (16), et une surface circonférentielle externe de la pile à combustible (16) est apposée sur l'organe d'apposition (18b, 63) via la portion de suppression de fuite de gaz, si bien que lorsque l'adhésif céramique est durci, l'adhésif céramique de durcissement est plus progressif dans la partie environnante de chacune des piles à combustible (16) que dans d'autres parties, et la fissuration dans la portion de suppression de fuite de gaz est supprimée.

3. Système de pile à combustible à oxyde solide (1) selon la revendication 2, dans lequel chacune des piles à combustible (16) est cylindrique, et la portion de suppression de fuite de gaz est formée sur la surface externe de chacune des piles à combustible (16).

4. Système de pile à combustible à oxyde solide (1) selon la revendication 2, comprenant en outre une plaque (67) couvrant la partie de l'adhésif céramique en éloignement de la partie environnante de chacune des piles à combustible (16), dans lequel la plaque (67) rend le durcissement de l'adhésif céramique dans la portion de suppression de fuite de gaz plus progressif.

5. Système de pile à combustible à oxyde solide (1) selon la revendication 4, dans lequel la plaque (67) est formée d'un matériau ayant un coefficient de conductivité thermique plus élevé que celui des piles à combustible.

6. Système de pile à combustible à oxyde solide (1) selon la revendication 4, dans lequel la portion de suppression de fuite de gaz est formée par montage de la plaque (67) sur l'adhésif céramique mis à adhérer à l'organe d'apposition (63) lorsque chacune des piles à combustible (16) est mise à adhérer, pour que l'adhésif céramique avant durcissement soit pressé dans la partie environnante de chacune des piles à combustible (16).

7. Système de pile à combustible à oxyde solide (1) selon la revendication 6, dans lequel l'organe d'apposition (18b, 63) et la plaque (67) comportent respectivement des trous d'insertion (63a) à un espacement prédéterminé pour l'insertion des piles à combustible (16) et des parois de périmètre sont formées pour entourer chacun des trous d'insertion (63a) sur les portions de bord de chaque trou d'insertion (63a) de l'organe d'apposition (18b, 63) ou de la plaque (67).

8. Système de pile à combustible à oxyde solide (1) selon la revendication 1, dans lequel une plaque (67) est disposée sur la couche de l'adhésif céramique adhérant à chacune des piles à combustible (16), supprimant ainsi l'occurrence d'une fissuration pendant le durcissement de l'adhésif céramique.

9. Système de pile à combustible à oxyde solide (1) selon la revendication 8, dans lequel l'adhésif céramique est durci par une réaction de condensation par déshydratation, et la plaque (67) est montée sur l'adhésif céramique chargé pour couvrir les portions de la couche de l'adhésif céramique autres que la portion de suppression de fuite de gaz, de manière à exposer le voisinage d'une partie environnante des piles à combustible (16) mises à adhérer, si bien qu'au moment du durcissement de l'adhésif céramique, l'adhésif céramique avant durcissement est pressé sur le voisinage des surfaces des piles à combustible (16) et la quantité d'adhésif céramique augmente près de la surface des piles à combustible (16) mises à adhérer, si bien que la portion de suppression de fuite de gaz est formée.

10. Système de pile à combustible à oxyde solide (1) selon la revendication 8, dans lequel la pluralité de piles à combustible (16) est apposée par un adhésif céramique à l'organe d'apposition (18b, 63), et par injection d'un adhésif céramique sur l'organe d'apposition (18b, 63) avec les piles à combustible (16) insérées dans des trous d'insertion (63a) formés dans l'organe d'apposition (18b, 63), et des écartements entre la surface circonférentielle externe des piles à combustible (16) et les trous d'insertion (63a) sont remplis d'adhésif céramique, et les piles à combustible (16) sont apposées sur l'organe d'apposition (63a).

11. Système de pile à combustible à oxyde solide (1) selon la revendication 10, dans lequel la plaque (67) comporte une pluralité de trous d'insertion pour l'insertion des piles à combustible (16) ; la plaque (67) est disposée sur l'adhésif céramique qui a été injecté sur les organes d'apposition (18b, 63), et un écartement généralement uniforme est formé entre les trous d'insertion dans la plaque (67) et la surface périmétrique externe des piles à combustible (16).

12. Système de pile à combustible à oxyde solide (1) selon la revendication 11, dans lequel au moment du durcissement, l'adhésif céramique pressé avant durcissement depuis le dessous de la plaque (67) par le poids de la plaque (67) est chargé dans l'écartement entre chacun des trous d'insertion dans la plaque (67) et la surface périmétrique externe des piles à combustible (16).

13. Système de pile à combustible à oxyde solide (1) selon la revendication 11, dans lequel des parois de périmètre sont formées pour entourer les trous d'insertion (63a) sur les portions de bord de chaque trou d'insertion disposé sur la plaque (67).
